(19) Europäisches Patentamt
European Patent Office
Office européen des brevets

(11)  EP 1 771 005 B1

(12)  **EUROPEAN PATENT SPECIFICATION**

(45) Date of publication and mention
of the grant of the patent:
**29.02.2012   Bulletin 2012/09**

(51) Int Cl.:
**H04N 7/18** *(2006.01)*    **H04N 5/225** *(2006.01)*
**H04N 5/232** *(2006.01)*    **G08B 13/196** *(2006.01)*

(21) Application number: **05703781.4**

(22) Date of filing: **18.01.2005**

(86) International application number:
**PCT/JP2005/000544**

(87) International publication number:
**WO 2005/076620 (18.08.2005 Gazette 2005/33)**

(54) **DETECTION RANGE ADJUSTMENT DEVICE**

DETEKTIONSBEREICHS-EINSTELLEINRICHTUNG

DISPOSITIF DE REGLAGE DE LA PORTEE DE DETECTION

(84) Designated Contracting States:
**AT BE BG CH CY CZ DE DK EE ES FI FR GB GR HU IE IS IT LI LT LU MC NL PL PT RO SE SI SK TR**

(30) Priority:  **03.02.2004   JP 2004027294**

(43) Date of publication of application:
**04.04.2007   Bulletin 2007/14**

(73) Proprietor: **Panasonic Corporation**
**Kadoma-shi**
**Osaka 571-8501 (JP)**

(72) Inventors:
• **AOKI, Katsuji**
**c/o Matsushita Electric Industrial Co.,Ltd.**
**Osaka-shi**
**Osaka 540-6319 (JP)**
• **YOSHIDA, Atsushi**
**c/o Matsushita Electric Industrial Co.,Ltd.**
**Osaka-shi**
**Osaka 540-6319 (JP)**
• **ARAKI, Shouichi**
**c/o Matsushita Electric Industrial Co.,Ltd.**
**Osaka-shi, Osaka 540-6319 (JP)**

(74) Representative: **Pautex Schneider, Nicole Véronique et al**
**Novagraaf International SA**
**Chemin de l'Echo 3**
**1213 Onex (CH)**

(56) References cited:
WO-A1-03/003721        WO-A2-02/13515
JP-A- 2000 083 243      JP-A- 2001 094 975
JP-A- 2002 077 887      US-A1- 2004 008 773
US-B1- 6 760 063

**Description**

**Technical Field**

The present invention relates to a detection range adjustment device which adjusts the imaging range using cameras, and especially to a device which is optimum for a monitoring system using such cameras.

**Background Art**

Research and development on a device using cameras which are mainly for the use of monitoring has been actively performed recently. For this use purpose, such a device is required (i) to always monitor a target detection range in which monitoring is performed without leaving any dead ranges and detect a target detection object in the target detection range, and (ii) to obtain detailed information of the target detection object which is present in the target detection range.

A conventional device using cameras meets the above-mentioned requirements by automatically adjusting the imaging ranges of the respective cameras. Typical examples of such a device are shown in Patent Reference 1 and Patent Reference 2.

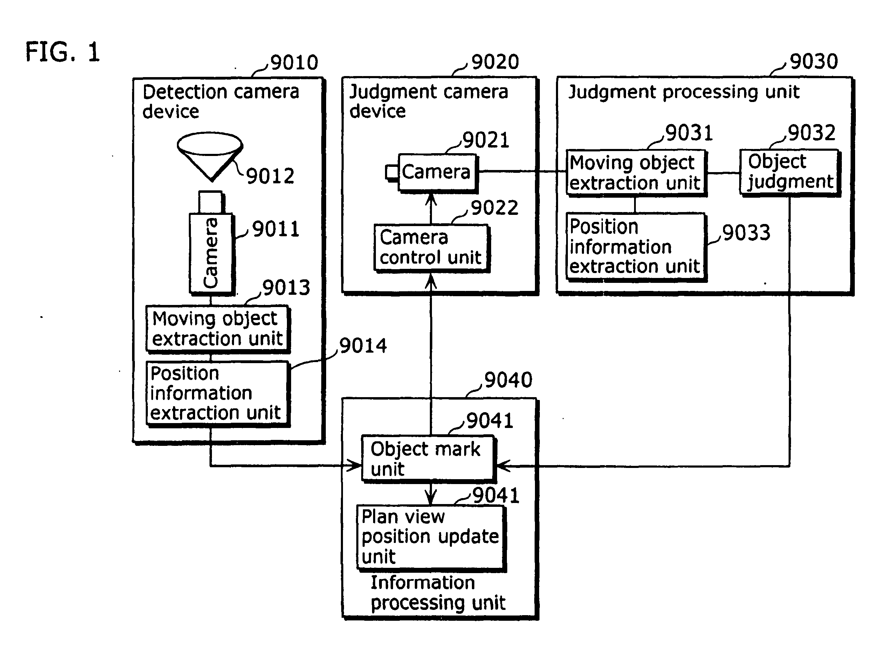

FIG. 1 shows a device which automatically adjusts the imaging ranges of those cameras described in Patent Reference 1. In the detection camera device 9010, an image of a target detection object is captured by a camera 9011 and a reflection mirror 9012 in a large imaging range, a moving object extraction unit 9013 extracts the target detection object from the images captured by the moving object extraction unit 9013, and a position information extraction unit 9014 extracts position information of the detected target detection object in the range. Hence, the detection camera device 9010 obtains the position information of the target detection object in the large imaging range. In the judgment camera device 9020, a camera control unit 9022 controls an angle of traverse, an angle of depression and a zoom ratio of the camera 9021 based on the position information of the target detection object, a judgment camera device 9020 captures enlarged images of the target detection object. Hence, the judgment camera device 9020 obtains detailed information of the target detection object.

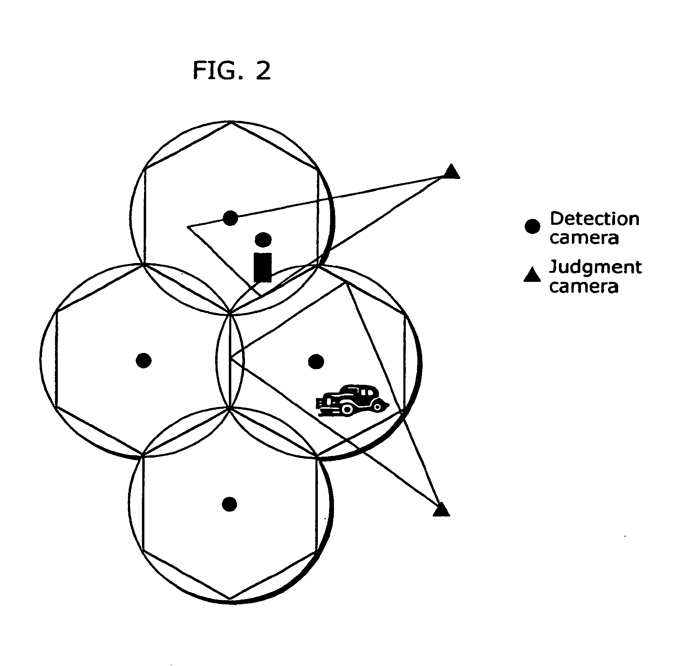

FIG. 2 is a diagram showing the detection range of the detection camera device 9010 and the detection range of the judgment camera device 9020. In the figure, each bullet shows the setting position of a detection camera device 9010. The detection camera device 9010 is a fixed camera. Each circle and each hexagon show the detection range of each detection camera device 9010. As shown in the figure, setting each detection camera device 9010 at regular intervals on purpose makes it possible to always detect a target detection object in the target detection range without leaving any dead ranges. The target detection range is a target monitoring range.

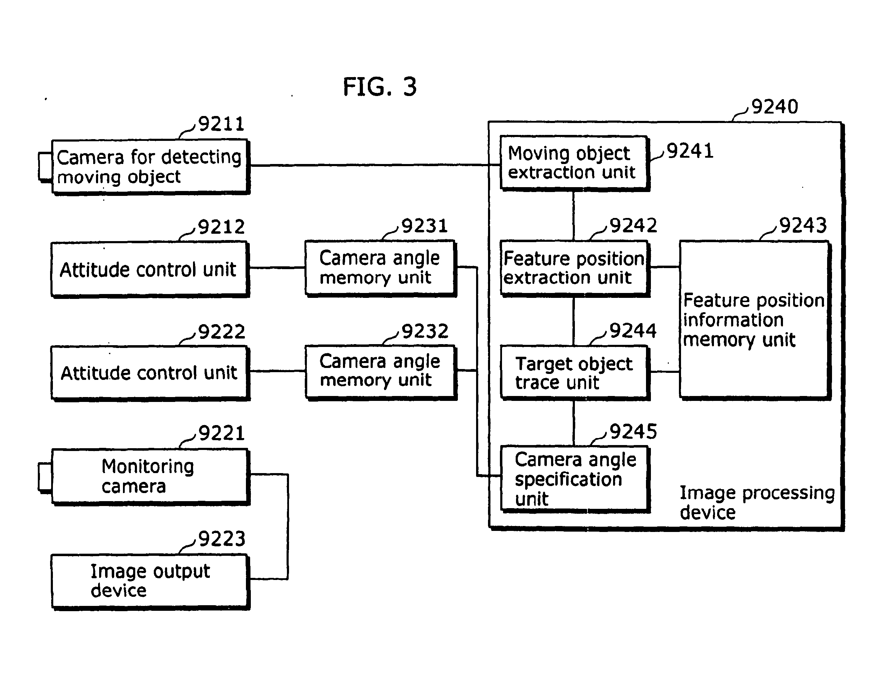

FIG. 3 shows an device which automatically adjusts an imaging range of those cameras described in Patent Reference 2. In the figure, a camera for detecting moving objects 9211 is intended for capturing images of a target detection object in a large imaging range and adjusts its imaging range by an attitude control unit 9212. A monitoring camera 9221 is intended for taking an enlarged image of the target detection object and adjusts its imaging range by an attitude control unit 9222.

The imaging range of each camera is determined in the image processing device 9240, taking into account the position of the target detection object which is extracted from the image captured by the camera for detecting moving objects 9211 and the imaging range of each camera, and based on the information which is previously stored in a camera angle memory unit 9231 and a camera angle memory unit 9232.

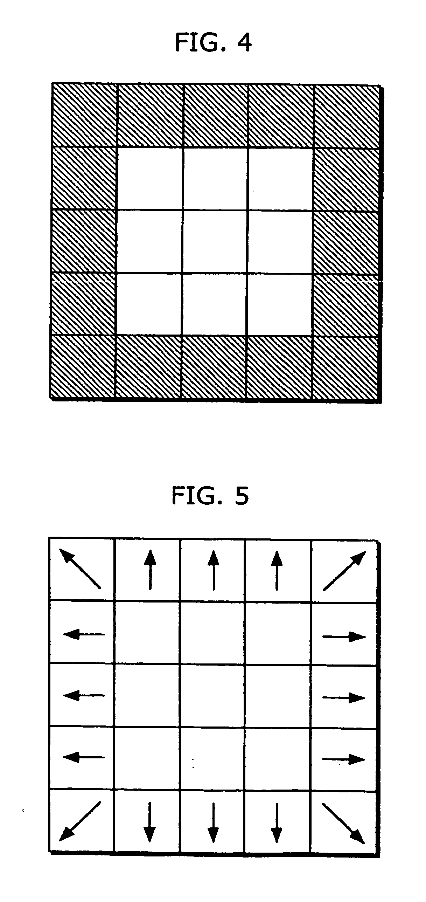

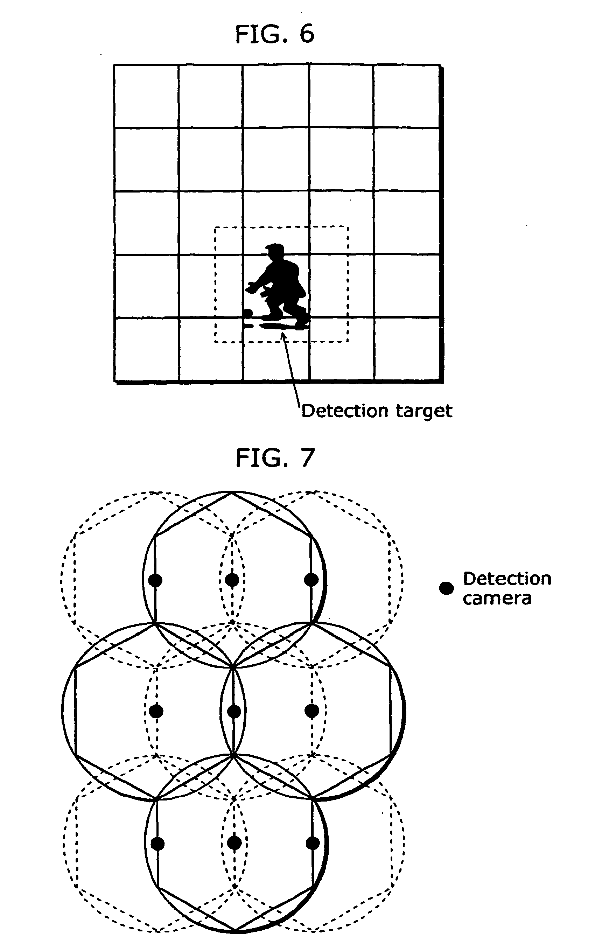

The method for determining the imaging range of each camera will be described below. FIG. 4 to FIG. 6 are diagrams which are used for describing the imaging range determination method of each camera. Each of the figures is an image which is captured by the camera for detecting moving objects 9211 and divided into several blocks. First, the imaging range of the camera for detecting moving objects 9211 is determined as will be described below. In the case where there is a target detection object in one of the diagonally-shaded blocks in FIG. 4, the angle of the camera for detecting moving objects 9211 is adjusted to the direction shown by the arrow described in the block position in FIG. 5 corresponding to the block in FIG. 4 so that the imaging range of the camera is adjusted. The imaging range of the camera for detecting moving objects 9211 is previously determined by someone so that it corresponds to the block positions, and the information of the imaging range is previously set in the camera angle memory unit 9231. Next, the imaging range of the monitoring camera 9221 is determined as will be described below. In the case where there is a target detection object in the block shown in FIG. 6, the angle of the monitoring camera 9221 is adjusted so that the imaging range is also adjusted to the imaging range which is shown by a broken line. The imaging range of the monitoring camera 9221 is previously determined by someone so that it corresponds to the block positions, and the information of the imaging range is previously set in the camera angle memory unit 9232.

The features of the conventional device using cameras will be described below. Note that, in this device, each camera detects a target detection object based on the information of the imaging range whose image was captured by the camera itself, or obtains detailed information of the target detection object. Therefore, the imaging range of each camera matches the range in which each camera detects the target detection object and obtains the information. Such being the case, the imaging range of each camera will be described as a detection range of the camera hereinafter.

First, the detection camera device 9010 in the conventional device shown in Patent Reference 1 and the camera for detecting moving objects 9211 in the conventional device shown in Patent Reference 2 each is intended for detecting a detection object in a large detection range. The judgment camera device 9020 in the conventional device shown in Patent Reference 1 and the monitoring camera 9221 in the conventional device shown in Patent Reference 2 each is intended for obtaining detailed information of the detection target such as an enlarged image of the detection target. In this way, each camera plays a fixed role which has been predetermined. A camera which is intended for playing one of the roles monitors the entire detection target range, and the other camera which is intended for playing the other role obtains the detailed information.

Also, in the conventional device shown in Patent Reference 2, for example, facing a status change that a detection target is present in the upper left block of FIG. 4, the detection range of the camera for detecting moving object 9211 is adjusted to the detection range in the upper left direction shown in the upper left block of FIG. 5. In this way, the detection range of each camera is determined and adjusted based on the information that someone previously conceived in a form of a table. The information describes detection ranges which respectively correspond to status change details.

However, since the entire target detection range is monitored by someone previously setting fixed cameras at regular intervals in the conventional device of Patent Reference 1, in the case where a single camera is broken, it becomes impossible to continue monitoring any more. Therefore, for example, as shown in FIG. 7, increasing the number of detection camera devices 9010 enables to cover the entire target detection range without leaving any dead ranges even in the case where one of the cameras is broken, but it is inefficient.

Also, in the device in Patent Reference 2, first, the detection range of each camera is determined and adjusted based on the information which someone previously conceived in a form of a table describing the detection ranges which respectively correspond to the status change details. Therefore, someone needs to conceive and generate, for each camera, the information in a form of a table describing the detection ranges which respectively correspond to the status change details. The information depends on the position and the breadth of the target detection range, the status change details conceived by someone, the positions at which respective cameras are set, and the number of cameras. In the case where there occur changes in the information, someone needs to remake the information each time. This operation becomes more troublesome as the number of cameras increases, resulting in increasing the cost and the workload for this. It is general that ten or more cameras are used in the camera monitoring system in a building.

Patent Reference 1: Japanese Patent publication No. 3043925; and
Patent Reference 2: Japanese Patent publication No. 3180730.

**Disclosure of Invention**

**Problems that Invention is to Solve**

The present invention solves the above-mentioned conventional problems. An object of the present invention is to provide a detection range adjustment device that does not require someone to predict status changes and to make a table and that is capable of detecting the entire target detection range without leaving any dead ranges even in the case where a camera is broken.

**Means to Solve the Problems**

The invention is defined according to claim 1. In order to achieve the object, the detection range adjustment device, of the present invention, includes camera terminals which are connected via a communication line, and enables capturing images of a target detection range by adjusting detection ranges which are imaging ranges of the camera terminals, each of the camera terminals includes: a camera which captures images of a detection range included in the target detection range and has a unit which changes the position of the detection range; a communication unit which sends, to the camera terminals other than the camera terminal, detection range information for specifying the detection range via the communication line, and to receive detection range information from the other camera terminals; and an adjustment unit which adjusts the position of detection range by controlling the camera of the camera terminal so that a total range of the detection ranges of the camera terminals covers the entire target detection range, based on (i) the detection range information of the camera terminal, and (ii) the detection range information of the other camera terminals which the communication unit receives.

For example, it is preferable that the adjustment unit adjust the position of the detection range so as not to generate an undetectable range in a range which is adjacent to the detection range of the camera terminal. The undetectable range is a range which does not belong to any of the detection ranges of the camera terminals.

This consequently eliminates producing a dead range in the target detection range, the whole target detection range is entirely detected. In addition, each camera terminal has the same function and operates automatically and coordinately communicating with other camera terminals whose detection ranges are adjacent to the detection range of each camera. Therefore, it becomes unnecessary that someone predicts the status changes and makes the table. Additionally, it becomes possible to capture an image of the entire target detection range without leaving any dead ranges even in the case where a camera is broken.

Here, it is further preferable that the camera include a unit which adjusts a spatial resolution of the detection range, the detection range information include information for specifying the spatial resolution of the detection range, and the adjustment unit control the camera of the camera terminal to adjust the position and the spatial resolution of the detection range so that the total range of the detection ranges of the camera terminals covers the entire target detection range and the spatial resolutions of the detection ranges of the camera terminals become approximately the same, based on (i) the detection range information of the camera terminal, and (ii) the detection range information of the other camera terminals which the communication unit received.

Each camera terminal controls not only camera angles (such as pan and tilt) but also a zoom ratio in this way. This enables adjusting the position and the size of the detection range, and consequently, entirely capturing images of the whole target detection range using an even spatial resolution.

Note that the present invention can be realized not only as the decentralized control structure in which an adjustment unit is set at each camera terminal but also as the centralized control structure in which a common adjustment unit, for adjusting the positions of the detection ranges of all the camera terminals, is set. Additionally, it can be realized as a detection range adjustment method and a program causing a computer to execute the method. Further, the present invention can be realized as a device for adjusting the detection range of a sensor which is capable of detecting physical values of a microphone and the like instead of the detection range in which a camera can capture images. Note that the program of the present invention can be distributed through a recording medium such as a CD-ROM and a communication medium such as the Internet.

## Effects of the Invention

With the detection range adjustment device of the present invention, the detection ranges of respective camera terminals are automatically adjusted so that the total range of the detection ranges of the respective cameras of the camera terminals can cover the predetermined entire target detection range. Therefore, it is unnecessary that someone conventionally conceives the information of the detection range of each camera in response to each status change. Additionally, the predetermined target detection range is efficiently covered without producing any dead ranges even in the case where several cameras are broken.

Therefore, the present invention guarantees that an arbitrary space can be detected without producing any dead ranges, and it is highly practical especially as, for example, a system for monitoring suspects in a school, a building and the like.

## Brief Description of Drawings

FIG. 1 is a block diagram in a conventional technique 1.
FIG. 2 is an illustration of camera angle ranges in the conventional technique 1.
FIG. 3 is a block diagram in a conventional technique 2.
FIG. 4 is an illustration of an operation in the conventional technique 2.
FIG. 5 is an illustration of an operation in the conventional technique 2.
FIG. 6 is an illustration of an operation in the conventional technique 2.
FIG. 7 is an illustration of an operation in the conventional technique 2.
FIG. 8 is a block diagram of the structure of a detection range adjustment device in a first embodiment of the present invention.
FIG. 9A to 9C are example diagrams which respectively show detection ranges and overlap ranges.
FIG. 10A to 10C are block diagrams of the structure of a camera P.
FIG. 11 is a flow chart showing the processing performed by an adjustment unit.
FIG. 12A and 12B are illustrations showing adjacent detection ranges.
FIG. 13 is an illustration showing a function U().
FIG. 14 is an illustration showing another function U().
FIG. 15 is a block diagram showing the structure of a detection range adjustment device of a centralized control system in which a single adjustment unit adjusts all the detection ranges.

FIG. 16A and 16B are diagrams illustrating respective examples where the present invention is applied to a microphone.

FIG. 17A and 17B are diagrams showing respective methods for applying the processing on the X axis to the processing on the Y axis.

FIG. 18 is a block diagram of the structure of a detection range adjustment device in a second embodiment of the present invention.

FIG. 19A and 19B are block diagrams of the structure of a camera PR.

FIG. 20 is a flow chart showing the processing performed by the adjustment unit.

FIG. 21 is an illustration of calculating the position of a detection range in a supplemental explanation 1 of the present invention.

FIG. 22 is a block diagram of the structure of the detection range adjustment device in the supplemental explanation 1 of the present invention.

FIG. 23 is a block diagram of the structure of a camera in the supplemental explanation 1 of the present invention.

FIG. 24 is a diagram of a judgment method of a range adjacent to the detection range in a supplemental explanation 2 of the present invention.

FIG. 25A to 25C are diagrams of a judgment method of the ranges adjacent to the detection range in the supplemental explanation 2 of the present invention.

FIG. 26 is a block diagram of the structure of the detection range adjustment device in a supplemental explanation 3 of the present invention.

FIG. 27 is a flow chart showing the processing performed by an adjustment unit in a supplemental explanation 4 of the present invention.

FIG. 28 is a flow chart showing the processing performed by an adjustment unit in the supplemental explanation 4 of the present invention.

FIG. 29 is a block diagram of the structure of the detection range adjustment device in the supplemental explanation 4 of the present invention.

FIG. 30 is a block diagram of the structure of another detection range adjustment device in the supplemental explanation 4 of the present invention.

FIG. 31 is an illustration showing an example of a synthesized image.

FIG. 32 is a block diagram of the structure of a monitoring system composed of moving camera terminals.

FIG. 33 is an illustration showing an operation state of the moving camera terminal in the monitoring system.

FIG. 34 is an illustration showing a state where the moving camera terminal moves on the track of a rail which is set in a monitoring range.

**Numerical References**

P101, PR1101, PR1201, 2103 and P2301 Cameras
102 and 1102 Adjustment units
103, 1103 and 6104 Communication units
P110, P111, PR1110, 4101, 5301 and 5401 Camera terminals
112, 1112, 4102, 5302, 5402 and 6103 Networks
201, 1201, 2101 and 2301 Lenses
202, 1202, 2102 and 2302 Image capture surfaces
202, 1203 and 2303 Image processing units
204, 1204 and 2304 Attitude control units
1111 and 4105 Operation terminals
2305 Laser pointer
4103 Car
4104 Road
5405 Image synthesis unit
5406 Display unit
5407 Specification unit
6101 Moving camera terminal
6102 Moving unit
6105 Adjacent imaging range specification unit
6106 Imaging device

6107 Imaging range estimation unit
6108 Monitoring range memory unit
6109 Imaging position evaluation unit
6110 Imaging position adjustment unit

**Best Mode for Carrying Out the Invention**

Embodiments of the present invention will be described below with reference to figures.

(First Embodiment)

A first embodiment of the present invention will be described first.

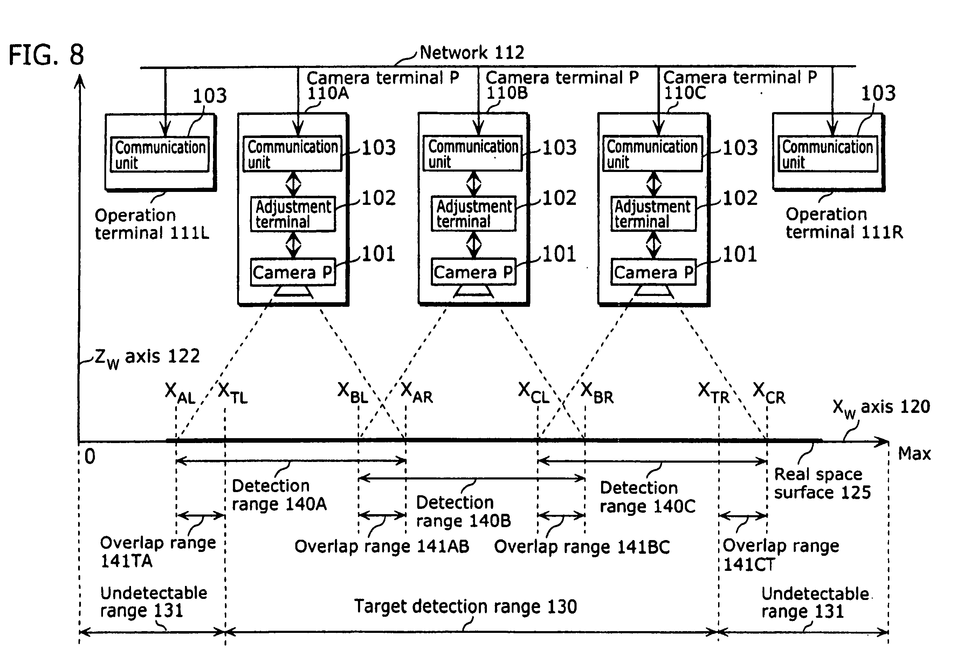

This embodiment relates to a detection range adjustment device which automatically adjusts the detection ranges of the cameras in camera terminals so that the total range of the detection ranges of the cameras in the camera terminals covers the predetermined entire target detection range. This embodiment will be described with reference to FIG. 8 to FIG. 14.

FIG. 8 is a block diagram of the structure of the detection range adjustment device in the first embodiment of the present invention. This detection range adjustment device is composed of camera terminals P110A to P110C and two operation terminals 111L and 111R which are connected through a network 112.

The camera terminals P110A to P110C are camera terminals which communicate with each other and operate automatically and coordinately, and has the same structural components (a range camera P101, an adjustment unit 102 and a communication unit 103). The camera P101 is a camera whose detection range position which is the position of the detection range is movable. The adjustment unit 102 is the processing unit which adjusts the position of the detection range of the camera P101. The communication unit 103 is the processing unit which communicates the detection range position information of the camera P101.

The adjustment unit 102 adjusts the position of the detection range by controlling the camera P101 in the camera terminal itself based on the detection range position information of the camera terminal and the detection range position information of the other camera terminals received by the communication unit 103 so that the total range of the detection ranges of the camera terminals P110A to P110C can cover the entire target detection range. More specifically, the adjustment unit 102 adjusts the position of the detection range of the camera terminal in the ranges adjacent to the detection range of the camera terminal so as not to generate an undetectable range which does not belong to any of the detection ranges of the camera terminals P110A to P110C.

The operation terminals 111L and 111R obtain instructions from a user, and notify the instructions to the camera terminals PR1110A to PR1110C. They include a communication unit 103 for communicating the position information of the target detection object. The network 112 is the network circuit which is used in communication via communication units 103 in the camera terminals P110A to P110C and the operation terminals 111L and 111R. The camera terminals P110A to P110C communicate the detection range position information of the cameras P101 in the camera terminals P via the network 112. The operation terminals 111L and 111R communicate the detection range position information to the respective camera terminals P110A to P110C via the network 112.

Here, in order to represent the range and the position of the range, an $X_w$ axis 120 and a $Z_w$ axis 122 which are perpendicular to each other are determined. The real space surface 125 is a surface in real space where the respective camera terminals P110A to P110C are present, for example, it is a floor in the case where the respective camera terminals P110A to P110C are set in a downward direction from a ceiling. In the case of the first embodiment, the real space surface 125 matches the $X_w$ axis 120, and various ranges and the positions of the ranges are described using this surface. On the real space surface 125, the target detection range 130 is the entire range to be detected in this invention, and the position of the range is represented using $X_{TL}$ and $X_{TR}$. The undetectable range 131 is the range which is not to be subjected to detection in the present invention.

The broken line emitted from each camera P101 shows the edges of the detection range of each camera P101. The detection range 140A is the detection range of the camera terminal P110A, and the position of the range is represented using $X_{AL}$ and $X_{AR}$. The detection range 140B is the detection range of the camera terminal P110B, and the position of the range is represented using $X_{BL}$ and $X_{BR}$. The detection range 140C is the detection range of the camera terminal P110C, and the detection range is represented using $X_{CL}$ and $X_{CR}$. The overlap range 141TA is the overlap range of the detection range 140A which is the detection range of the camera terminal P110A and the undetectable range 131, and the amount showing the size of the range is represented by the equation $X_{TL}-X_{AL}$. The overlap range 141AB is the overlap range of the detection range 140A which is the detection range of the camera terminal P110A and the detection range 140B which is the detection range of the camera terminal P110B, and the amount showing the size of the range is represented by the equation $X_{AR}-X_{BL}$. The overlap range 141BC is the overlap range of the detection range 140B which is the detection range of the camera terminal P110B and the detection range 140C which is the detection range of the camera terminal P110C, and the amount showing the size of the range is represented by the equation $X_{BR}$-$X_{CL}$. The overlap range 141CT is the overlap range of the detection range 140C which is the detection range of the camera terminal P110C and the undetectable range 131, and the amount showing the size of the range is represented by the equation $X_{CR}$-$X_{TR}$.

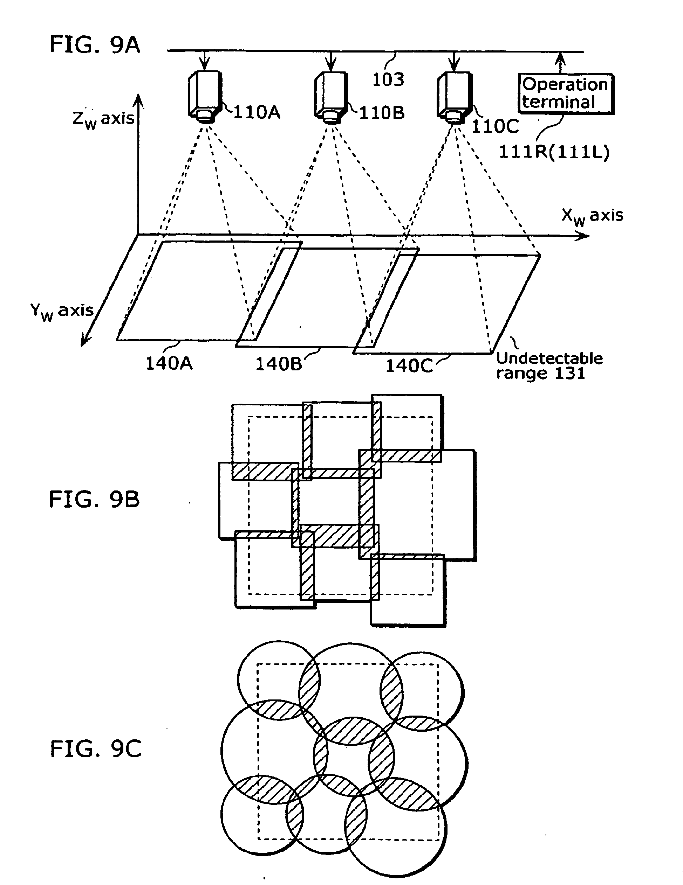

Note that the detection ranges and the overlap ranges are shown on the one-dimensional $X_w$ axis 120 in this figure for the convenience in explanation, but actually, there are other detection ranges and other overlap ranges on the surface. FIG. 9A is a diagram showing the detection range of this embodiment two-dimensionally. FIG. 9B shows an example of the detection ranges (squares) and the overlap ranges (diagonally-shaded ranges) in the case where the detection ranges are squares. FIG. 9C is a diagram showing an example of the detection ranges (circles) and the overlap ranges (diagonally-shaded ranges) in the case where the detection ranges are circles. The detection range adjustment device of this embodiment can be applied also in the case where the detection ranges are not two-dimensional but three-dimensional as will be described later. As for processing, one-dimensional processing can be extendedly applied to two-dimensional processing and three-dimensional processing, and thus only X axis will be focused on in the description.

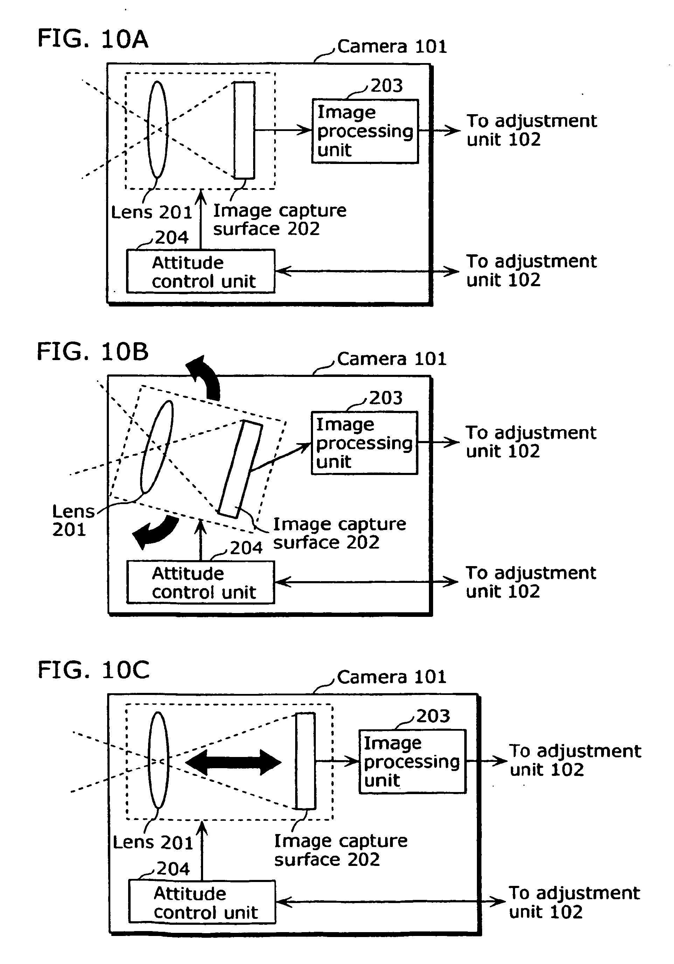

FIG. 10A is a diagram showing the internal structure of the camera P101. The camera P101 includes a lens 201, an image capture surface 202, an imaging processing unit 203 and an attitude control unit 204. The lens 201 is for forming images, the image capture surface 202 is a device such as a CCD which captures an image formed on the lens 201, the image processing unit 203 is the processing unit which processes the image captured on the image capture surface 202, and the attitude control unit 204 is the processing unit which controls the positions of the lens 201 and the image capture surface 202, or the interval of the lens 201 and the image capture surface 202. The attitude control of the lens 201 and the image capture surface 202 which are controlled by the attitude control unit 204 is the control which is generally called pan or tilt. As shown in FIG. 10B, the lens 201 and the image capture surface 202 are rotated in an associated manner, centering a point or an axis. Additionally, the control on the interval between the lens 201 and the image capture surface 202 performed by the attitude control unit 204 is the control which is generally called zoom, and as shown in FIG. 10C, the interval between the lens 201 and the image capture surface 202 increases and decreases.

The operation of the detection range adjustment device in the first embodiment of the present invention will be described with reference to FIG. 8. In the camera terminals P110A to P110C the cameras P101 have internal structures respectively as shown in FIG. 10A. In each camera P101, the image formed on the lens 201 shown in FIG. 10A is converted into an image signal on the image capture surface 202. Subsequently, the detection of a target detection object and the extraction of information from the image signal are performed in the image processing unit 203 using a general image processing technique and a general image recognition technique. In this way, the camera P101 performs operations such as the detection of a target detection object and the extraction of information in its imaging range which is determined as a detection range in the real space surface, based on the angles of the lens 201 and the image capture surface 202 and the interval between the lens 201 and the image capture surface 202. The information of the detected target is sent to the adjustment unit 102 in FIG. 8. As the above-mentioned general image processing technique and image recognition technique, it should be noted that the well-known background subtraction technique and dynamic subtraction technique can be listed.

Further, in the camera P101, the attitude control unit 204 shown in FIG. 10A adjusts the position of the detection range of the camera P101 to the position specified by the adjustment unit 102 in FIG. 8 by controlling the angles of the lens 201 and the image capture surface 202, or the interval between the lens 201 and the image capture surface 202. Additionally, the attitude control unit 204 sends the position information of the detection range of the current camera P101 to the adjustment unit 102. The position information is determined based on the angles of the lens 201 and the image capture surface 202 or the interval between the lens 201 and the image capture surface 202. In this way, the position of the detection range of the camera P101 is controlled by the adjustment unit 102, and the position information of the detection range of the current camera P101 is sent to the adjustment unit 102. Note that the method for calculating the position of the detection range of the current camera P101 will be described later in detail in the supplementary explanation 1. The position is determined based on the angles of the current lens 201 and image capture surface 202 or the interval between the current lens 201 and image capture surface 202. Additionally, the positions of the lens 201 and the image capture surface 202 and the interval between the current lens 201 and the image capture surface 202 can be changed using, for example, a stepper motor, and also, the current position and the interval can be read.

The adjustment unit 102 periodically sends the position information of the detection range of the camera P101 which is sent from the camera P101 to the adjustment unit 102 of the other camera terminal P via the communication unit 103 and the network 112. Additionally, the adjustment units 102 receive the position information of the detection ranges of the cameras P101 in the other camera terminals P which are periodically sent from the adjustment units 102 in the other camera terminals P. Further, in the operation terminals 111L and 111R, the communication units 103 periodically send the position information of the target detection range 130 to the adjustment units 102 in the camera terminals P110A to P110C via the network 112.

In this way, the adjustment units 102 periodically obtain the position information of the detection ranges of cameras P101 in the current camera terminal P and the other camera terminals P and the position information of the target detection range. Additionally, in the first embodiment, the adjustment units 102 periodically obtain, via the communication unit 103 and the network 112, $X_{AL}$ and $X_{AR}$ indicating the position of the detection range 140A of the camera terminal P110A, $X_{BL}$ and $X_{BR}$ indicating the position of the detection range 140B of the camera terminal P110B, $X_{CL}$ and $X_{CR}$ indicating the position of the detection range 140C of the camera terminal P110C, and $X_{TL}$ and $X_{TR}$ indicating the position of the target detection range 130.

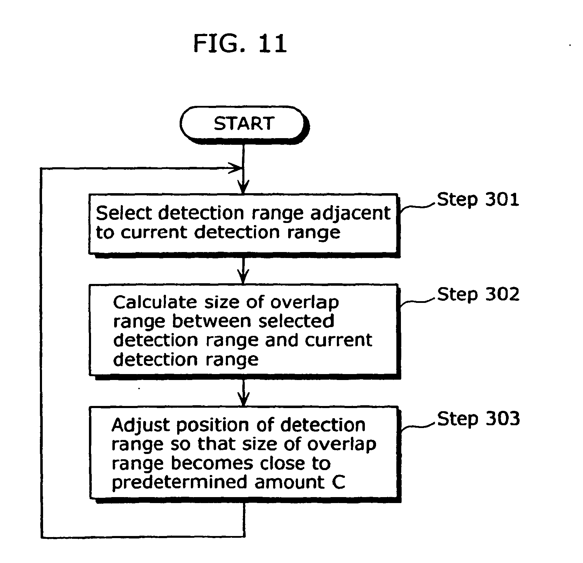

Further, the adjustment unit 102 performs the processing of the following steps shown in FIG. 11 based on the position information of the obtained detection ranges and the position information of the target detection range so as not to generate an undetectable range which does not belong to any of detection ranges of camera terminals P110A to P110C, in the range adjacent to the detection range of the current camera terminal.

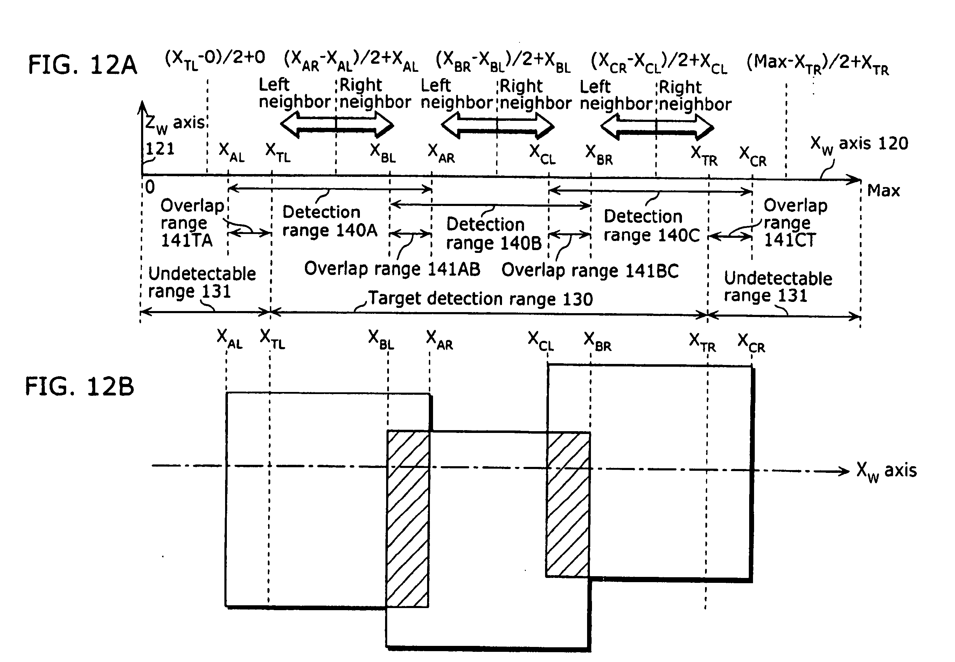

First, detection ranges of the other camera terminals P adjacent to the detection range of the current camera terminal P or an undetectable range is selected based on the information indicating the detection range positions of the cameras P101 in the current camera terminal P and the other camera terminals P (Step 301). An example of this selection method will be described below with reference to FIG. 12.

FIG. 12A is a diagram showing the detection ranges and the overlap ranges on the $X_w$ axis in the case where the detection ranges shown in FIG. 12B are squares. Firstly calculated are the center position of the detection range of the current camera terminal P, the center positions of the detection ranges of the other camera terminals P, and the center position of the undetectable range. Subsequently, the detection ranges of the other cameras or the undetectable range which has a center position whose value is smaller than the value of the center position of the detection range of the current camera terminal P is selected as the detection range which is the left neighbor. Additionally, the detection ranges of the other cameras or the undetectable range which has a center position whose value is larger than the value of the center position of the detection range of the current camera terminal P is selected as the detection range which is the right neighbor. Note that, in the case where there are several detection ranges or an undetectable range of the other cameras whose values are smaller or larger, the range whose center position is closest to the center position of the detection range of the current camera terminal P is selected from among them. Accordingly, the followings are selected: in the camera terminal P110A, the undetectable range 131 as the left neighbor; and the detection range 140B as the right neighbor; in the camera terminal P110B, the detection range 140A as the left neighbor; and the detection range 140C as the right neighbor; and in the camera terminal P110C, the detection range 140B as the left neighbor; and the undetectable range 131 as the right neighbor. Note that there are several methods other than the selection method of the adjacent ranges. The other methods will be described later in a supplementary explanation 2.

Next, the amount showing the size of the overlap ranges of the detection ranges selected in Step 301 and the detection range of the current camera terminal P are calculated (Step 302). In this calculation method, the overlap ranges can easily be calculated based on the size relationship of the selected detection range and the detection range of the current camera terminal P as shown in FIG. 12. Accordingly, the followings are calculated: in the camera terminal P110A, the amount $X_{TL}$-$X_{AL}$ showing the size of the overlap range 141TA which is the left overlap range; and the amount $X_{AR}$-$X_{BL}$ showing the size of the overlap range 141AB which is the right overlap range; in the camera terminal P110B, the amount $X_{AR}$-$X_{BL}$ showing the size of the overlap range 141AB which is the left overlap range; and the amount $X_{BR}$-$X_{CL}$ showing the size of the overlap range 141BC which is the right overlap range; and in the camera terminal P110C, the amount $X_{BR}$-$X_{CL}$ showing the size of the overlap range 141BC which is the left neighbor; and the amount $X_{CR}$-$X_{TR}$ showing the size of the overlap range 141CT which is the right neighbor.

Next, the detection range position of the current camera terminal P is adjusted so that the amount indicating the size of the overlap range which is calculated in Step 302 can become close to a certain amount C (Step 303). This adjustment method will be described below. First, a function UP() is determined as the amount indicating the difference between the amount indicating the size of the overlap range and 0 or a certain amount C which is over 0. In this first embodiment, as shown in the following equations 1 to 3, the same function is applied to the respective camera terminals P110A to P110C.

## [Mathematical Expression 1]

$$UP_{AL}(X_{AL}) = (X_{TL} - X_{AL} - C)^2 \quad UP_{AR}(X_{AR}) = (X_{AR} - X_{BL} - C)^2 \quad \text{(Equation 1)}$$

## [Mathematical Expression 2]

$$UP_{BL}(X_{BL}) = (X_{AR} - X_{BL} - C)^2 \quad UP_{BR}(X_{BR}) = (X_{BR} - X_{CL} - C)^2 \quad \text{(Equation 2)}$$

## [Mathematical Expression 3]

$$UP_{CL}(X_{CL}) = (X_{BR} - X_{CL} - C)^2 \quad UP_{CR}(X_{CR}) = (X_{CR} - X_{TR} - C)^2 \quad \text{(Equation 3)}$$

The equations 1 to 3 are used for the camera terminals P110A to P110C, and the square values of the differences between the amounts indicating the sizes of the overlap ranges and the certain amount C are determined as the amounts indicating the respective differences. Next, as shown in the following equations 4 to 6, the next detection range position of the current camera terminal P will be calculated using the generally well-known steepest descent method.
## [Mathematical Expression 4]

$$X'_{AL} = X_{AL} - \alpha \frac{\partial UP_{AL}(X_{AL})}{\partial X_{AL}} \quad X'_{AR} = X_{AR} - \alpha \frac{\partial UP_{AR}(X_{AR})}{\partial X_{AR}} \quad \text{(Equation 4)}$$

## [Mathematical Expression 5]

$$X'_{BL} = X_{BL} - \alpha \frac{\partial UP_{BL}(X_{BL})}{\partial X_{BL}} \quad X'_{BR} = X_{BR} - \alpha \frac{\partial UP_{BR}(X_{BR})}{\partial X_{BR}} \quad \text{(Equation 5)}$$

## [Mathematical Expression 6]

$$X'_{CL} = X_{CL} - \alpha \frac{\partial UP_{CL}(X_{CL})}{\partial X_{CL}} \quad X'_{CR} = X_{CR} - \alpha \frac{\partial UP_{CR}(X_{CR})}{\partial X_{CR}} \quad \text{(Equation 6)}$$

In the equations 4 to 6, $X'_{AL}$, $X'_{AR}$, $X'_{BL}$, $X'_{BR}$, $X'_{CL}$, $X'_{CR}$ respectively show the next detection range position of the camera terminals P110A to P110C, and $\alpha$ is a constant. Lastly, the detection range positions of the cameras P101 are adjusted to the next positions of detection ranges.
Note that $X_{AL}$ and $X_{AR}$ need to be independently adjustable in the above-mentioned method. The $X_{AL}$ and $X_{AR}$ indicate, in combination, the position of the detection range of the current camera terminal P. This is also true of $X_{BL}$, $X_{BR}$, $X_{CL}$, and $X_{CR}$. It is difficult for a general camera to adjust them independently as described in FIG. 10A or as will be described later in a supplementary explanation 1. In this way, in the case where it is impossible to adjust them independently, on condition that the function UP() is shown in the following equations 7 to 9, and using the equations of the steepest descent method shown in the following equations 10 to 12 enables performing adjustments similar to the one mentioned above.

## [Mathematical Expression 7]

*When*

$$UP_A(X_{AL}, X_{AR}) = UP_{AL}(X_{AL}) + UP_{AR}(X_{AR})$$

$$X_{AL} = F_{AL}(\theta_{1A}, \theta_{2A}\ldots), X_{AR} = F_{AR}(\theta_{1A}, \theta_{2A}\ldots),$$

$$UP_A(X_{AL}, X_{AR}) = UP_A(\theta_{1A}, \theta_{2A}\ldots) = (X_{TL} - F_{AL}(\theta_{1A}, \theta_{2A}\ldots) - C)^2 + (F_{AR}(\theta_{1A}, \theta_{2A}\ldots) - X_{BL} - C)^2$$

(Equation 7)

## [Mathematical Expression 8]

*When*

$$UP_B(X_{BL}, X_{BR}) = UP_{BL}(X_{AL}) + UP_{BR}(X_{AR})$$

$$X_{BL} = F_{BL}(\theta_{1B}, \theta_{2B}\ldots), X_{BR} = F_{BR}(\theta_{1B}, \theta_{2B}\ldots),$$

$$UP_B(X_{BL}, X_{BR}) = UP_B(\theta_{1B}, \theta_{2B}\ldots) = (X_{AR} - F_{BL}(\theta_{1B}, \theta_{2B}\ldots) - C)^2 + (F_{BR}(\theta_{1B}, \theta_{2B}\ldots) - X_{CL} - C)^2$$

(Equation 8)

## [Mathematical Expression 9]

*When*

$$UP_C(X_{CL}, X_{CR}) = UP_{CL}(X_{CL}) + UP_{CR}(X_{CR})$$

$$X_{CL} = F_{CL}(\theta_{1C}, \theta_{2C}\ldots), X_{CR} = F_{CR}(\theta_{1C}, \theta_{2C}\ldots),$$

$$UP_C(X_{CL}, X_{CR}) = UP_C(\theta_{1C}, \theta_{2C}\ldots) = (X_{BR} - F_{CL}(\theta_{1C}, \theta_{2C}\ldots) - C)^2 + (X_{TR} - F_{CR}(\theta_{1C}, \theta_{2C}\ldots) - C)^2$$

(Equation 9)

## [Mathematical Expression 10]

$$\dot{\theta}_{1A} = \theta_{1A} - \alpha \frac{\partial UP_A(\theta_{1A})}{\partial \theta_{1A}} \quad \dot{\theta}_{2A} = \theta_{2A} - \alpha \frac{\partial UP_A(\theta_{2A})}{\partial \theta_{2A}} \ldots, \quad \text{(Equation 10)}$$

## [Mathematical Expression 11]

$$\theta_{1B}^{\cdot} = \theta_{1B} - \alpha \frac{\partial UP_B(\theta_{1B})}{\partial \theta_{1B}} \quad \theta_{2B}^{\cdot} = \theta_{2B} - \alpha \frac{\partial UP_B(\theta_{2B})}{\partial \theta_{2B}} \cdots \quad \text{(Equation 11)}$$

## [Mathematical Expression 12]

$$\theta_{1C}^{\cdot} = \theta_{1C} - \alpha \frac{\partial UP_C(\theta_{1C})}{\partial \theta_{1C}} \quad \theta_{2C}^{\cdot} = \theta_{2C} - \alpha \frac{\partial UP_C(\theta_{2C})}{\partial \theta_{2C}} \cdots , \quad \text{(Equation 12)}$$

The adjustment unit 102 performs the processing of Steps 301, 302 and 303 in sequence, and returns to the processing of Step 301 after finishing the processing of Step 303. Subsequently, the adjustment unit 102 adjusts the detection range of the camera P101 repeating the processing of Steps 301 to 303.

The operations of the detection range adjustment device in the first embodiment of the present invention have been described above. The next position of the detection range of the current camera terminal P is calculated using the steepest descent method so that the amount indicating the size of the overlap ranges in Step 303 becomes close to 0 or a certain amount C which is over 0. Additionally, the position of the detection range of the camera P101 is adjusted to the next position of the detection range. Therefore, the detection range 140A, detection range 140B and detection range 140C which are the detection ranges of the camera terminals P110A to P110C and the undetectable range are to have overlap ranges whose sizes are 0 or a certain amount C which is over 0, by repeating the processing of Step 301 to Step 303. As shown in FIG. 8, the detection ranges of camera terminals P110A to P110C and the undetectable range have overlap ranges whose sizes are 0 or a certain amount C which is over 0, and the target detection range 130 is included in the total range of the camera terminals P110A to P110C. Therefore, the detection range adjustment device of the present invention can detect the entire target detection range 130 without leaving any dead ranges using the camera terminals P110A to P110C.

Additionally, the adjustment unit 102 can have an effect of detecting the entire target detection range 130 without leaving any dead ranges by repeating the processing of Step 301 to Step 303. The processing of Step 302 and Step 303 which are repeatedly performed on the detection ranges of the other cameras P adjacent to the detection range of the current camera terminal P selected in Step 301.

Therefore, even in the case where there is a change in the positions of the detection ranges of the other cameras P which are adjacent to the detection range of the current camera terminal P or the position of the target detection range, it is possible to obtain the effect of detecting the entire target detection range 130 without leaving any dead ranges in response to the change. The cases where there is a change in the positions of the detection ranges or the position of the target detection range are as follows:

(1) the detection range position of the camera terminal P is adjusted;
(2) a camera terminal P is newly set;
(3) several camera terminals P among all camera terminals P are removed or broken; and
(4) the position of target detection range sent from an operation terminal is adjusted.

The operations of the present invention in response to the change will be described later in detail in supplementary explanations 3 and 4, the change leads to a change in the positions of detection ranges sent by the respective camera terminals P or the position of the target detection range sent by the operation terminal. Additionally, even in the case where the positions of the detection ranges are not sent or new positions of the detection ranges are sent, the detection range adjustment device of the present invention can detect the entire target detection range 130 without leaving any dead ranges using the respective camera terminals P in response to the change in the positions of the detection ranges or the position of the target detection range.

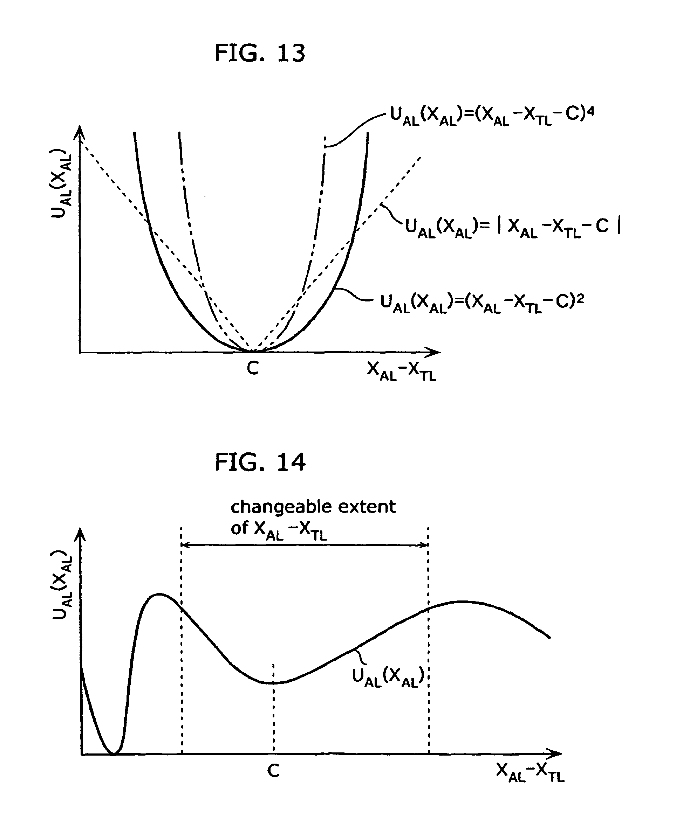

Note that, in this first embodiment, as shown in the above-mentioned equation 1 to equation 3 and equation 7 to equation 9, the function UP() indicating the difference between the amount indicating the size of the overlap ranges and 0 or a certain amount C which is over 0 is determined as a square value of the difference between the amount indicating the size of the overlap ranges and the certain amount C. However, as shown in FIG. 13, the function UP() may be any of (i) an even number power value such as a four power, a six power, and a ten power of the difference between the amount indicating the size of the overlap range and the certain amount C and (ii) an absolute value of the difference between the amount indicating the size of the overlap range and the certain amount C. Since the function UP () becomes the smallest value when C is obtained from equation: $X_{AL} - X_{TL}$, the amount indicating the size of the overlap range becomes close to the certain amount C as the effect of the steepest descent method performed in Step 303, and thus a similar effect can be obtained.

Also, even in the case where the function UP() indicating the difference between the amount indicating the size of the overlap range and 0 or a certain amount C which is over 0 is not the smallest value when C is obtained from equation: $X_{AL}-X_{TL}$ as shown in FIG. 14, but the function UP() having a minimum value, a similar effect can be obtained as long as the function UP() is the smallest value when C is obtained from equation: $X_{AL}-X_{TL}$ in the adjustable range of $X_{AL}-X_{TL}$.

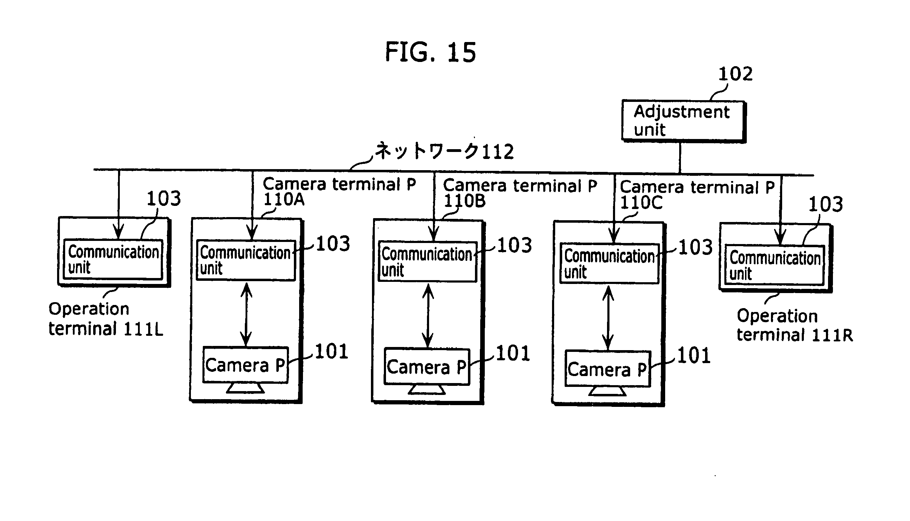

Additionally, in the first embodiment, as shown in FIG. 8, the adjustment units 102 are present in the respective camera terminals P110A to P110C in a decentralized way. However, also in the case of the detection range adjustment device which has a single adjustment unit 102 shown in FIG. 15, a similar effect can be obtained as long as the single adjustment unit 102 adjusts all the positions of the detection ranges of the cameras P101 in the respective camera terminals P110A to P110C.

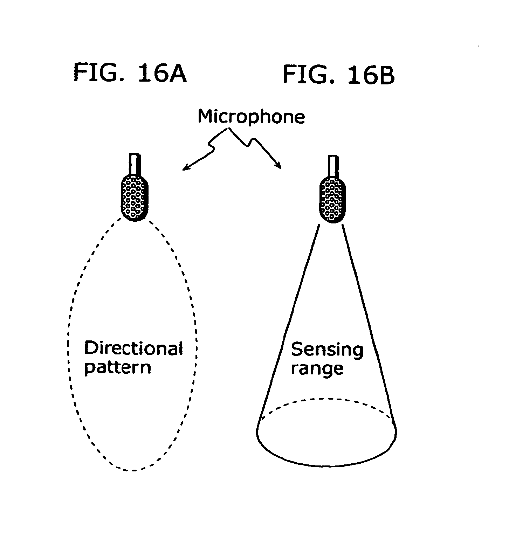

Additionally, in the first embodiment, the cameras P101 are handled as general cameras, but a similar effect can be obtained also in the case where the cameras P101 are the cameras which detect visible light or invisible light such as infrared rays and ultraviolet rays. Further, a similar effect can be obtained also in the case where microsensors, pressure sensors, temperature sensors and air pressure sensors are general sensors which have detection ranges which is for detecting various kinds of physical amounts and whose detection range positions are adjustable. For example, as for a microphone which has a directional pattern as shown in FIG. 16A, it is possible to define the direction (range) in which sound can be detected with a sensitivity which is a certain degree or more as a sense range (detection range) as shown in FIG. 16B. Therefore, controlling the angles of the microphone in a similar manner to pan and tilt of the cameras in this embodiment makes it possible to form a detection range adjustment device composed of plural microphones instead of or in addition to the cameras in this embodiment. In other words, the present invention can be applied to not only cameras but also the above-mentioned sensors.

In addition, in this first embodiment, the network 112 is handled as a network circuit which is used in general communication, but a similar effect can be obtained even in the case where the network 112 is a wired or wireless network.

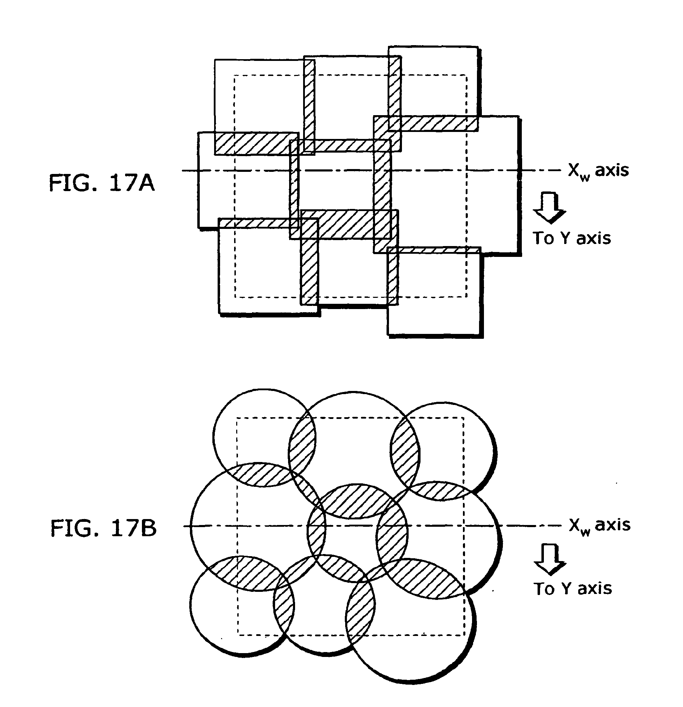

Note that the processing on the X axis has been mainly described in this embodiment, but applying the processing to the processing on the Y axis eliminates producing a dead range two-dimensionally. As shown in FIG. 17, the processing on the $X_w$ axis (the processing for making the overlap range 0 or more) in this embodiment is performed, shifting the $X_w$ axis to the direction of Y axis at certain intervals, and this processing is repeated until the detection ranges of the respective camera terminals are set the detection ranges for the respective camera terminals are adjusted to the largest detection ranges in scanning to the Y axis direction) so that overlap range becomes 0 or more at any positions on the Y axis. This eliminates producing a dead range on a surface irrespective of how the respective camera terminals are placed or the shapes of the detection ranges. This dimensional extension can be applied to the Z axis.

(Second Embodiment)

Next, a second embodiment of the present invention will be described below.

This embodiment relates to a detection range adjustment device which can obtain images of the respective cameras whose spatial resolutions are the same in response to the following change even in the case where there is a change in the spatial resolutions of the detection ranges of the other camera terminals whose detection ranges are adjacent to the detection range of the current camera terminal.

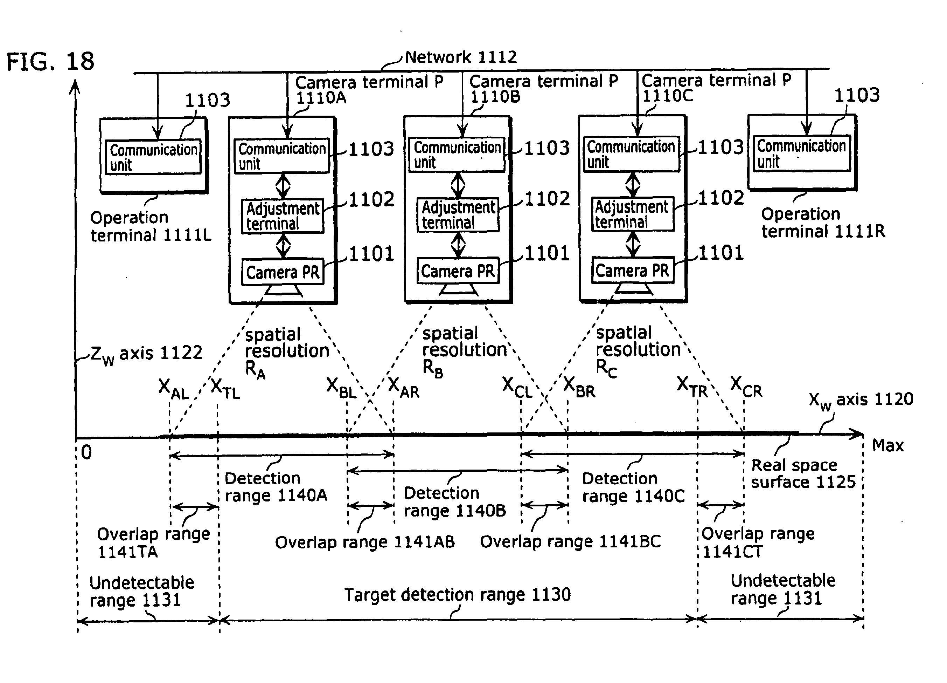

FIG. 18 is a block diagram of the structure of the detection range adjustment device in the second embodiment of the present invention. This detection range adjustment device is composed of several camera terminals PR1110A to PR1110C which are connected on the network 112 and two operation terminals 1111L and 1111R.

The camera terminals PR1110A to PR1110C communicate with each other and operate automatically and coordinately, and they include the same structural components (a camera PR1101, an adjustment unit 1102 and a communication unit 1103). The camera PR1101 is the camera (such as a camera which can perform zoom control) whose detection range position which is the position of the detection range and detection range spatial resolution which is the spatial resolution of the detection range are adjustable. The adjustment unit 1102 is the processing unit which adjusts the position of the detection range of the camera PR1101 and the spatial resolution of the detection range. The communication unit 1103 is the processing unit which communicates the detection range position information of the camera PR1101 and the spatial resolution information of the detection range.

Based on the position information of the detection range of the current camera terminal and the spatial resolution information of the detection range and the position information of the detection ranges of the other camera terminals and the spatial resolution information of the detection ranges which are received in the communication unit 1103, the adjustment unit 1102 controls the camera of the current camera terminal to adjust the position and the spatial resolution of the detection range so that the total range of the detection ranges of the camera terminals PR1110A to PR1110C entirely covers the whole target detection range, and the spatial resolutions of the detection ranges of the camera terminals PR1110A to PR1110C become approximately the same. More specifically, the adjustment unit 1102 adjusts the position and the spatial resolution of the detection range of the current camera terminal so as not to generate an undetectable range which does not belong to any of the detection ranges of the camera terminals PR1110A to PR1110C in the range adjacent to the detection range of the current camera terminal and so that the spatial resolution of the detection range of the current camera terminal and the spatial resolutions of the detection ranges of the other camera terminals which are adjacent to the detection range become approximately the same.

The operation terminals 1111L and 1111R obtain instructions from a user, notify the instructions to the camera terminals PR1110A to PR1110C, and include a communication unit 1103 for communicating the position information of the target detection object. The network 1112 is the network circuit used in communication via the communication units 1103 of the respective camera terminals PR1110A to PR1110C and the operation terminals 1111L and 1111R. The camera terminals PR1110A to PR1110C communicate the position information and the spatial resolutions of the detection ranges of the cameras PR1101 in the camera terminals PR via the network 1112, and the operation terminals 1111L and 1111R communicate the target detection range to the camera terminals PR1110A to PR1110C via the network 1112.

The operation terminals 1111L and 1111R, and the network 1112 are respectively similar to the operation terminals 111L and 111R, and the network 112 in FIG. 8 in the first embodiment of the present invention. This second embodiment differs from the first embodiment in that each camera PR1101 can adjust not only the detection range position but also the spatial resolution of the detection range, and, accompanied by this, the adjustment unit 1102 and the communication unit 1103 handle not only the position information of the detection range but also the spatial resolution information of the detection range. Note that a spatial resolution is a resolution of the space in the image captured by a camera, and it corresponds to the value obtained by dividing the size of a detection range using the number of imaging devices. This spatial resolution changes mainly by the zoom control of a camera, and this becomes high as the size of the detection range becomes small (a detailed image can be obtained).

The followings are the same as the ones in the first embodiment of the present invention shown in FIG. 8: an $X_W$ axis 1120; a $Z_W$ axis 1122; a real space surface 1125; a target detection range 1130; $X_{TL}$ and $X_{TR}$ indicating the position of the target detection range 1130; an undetectable range 1131; a detection range 1140A; $X_{AL}$ and $X_{AR}$ indicating the position of the detection range 1140A; a detection range 1140B; $X_{BL}$ and $X_{BR}$ indicating the position of the detection range 1140B; a detection range 1140C; $X_{CL}$ and $X_{CR}$ indicating the position of the detection range 1140C; an overlap range 1141TA; the amount $X_{TL}-X_{AL}$ indicating the size of the overlap range 1141TA; an overlap range 1141AB; the amount $X_{AR}-X_{BL}$ indicating the size of the overlap range 1141AB; an overlap range 1141BC; the amount $X_{BR}-X_{CL}$ indicating the size of the overlap range 1141BC; an overlap range 1141CT; and the amount $X_{CR}-X_{TR}$ indicating the size of the overlap range 1141CT. $R_A$ shows the spatial resolution of the detection range of the camera terminal PR1110A, $R_B$ shows the spatial resolution of the detection range of the camera terminal PR1110B, and $R_C$ shows the spatial resolution of the detection range of the camera terminal PR1110C.

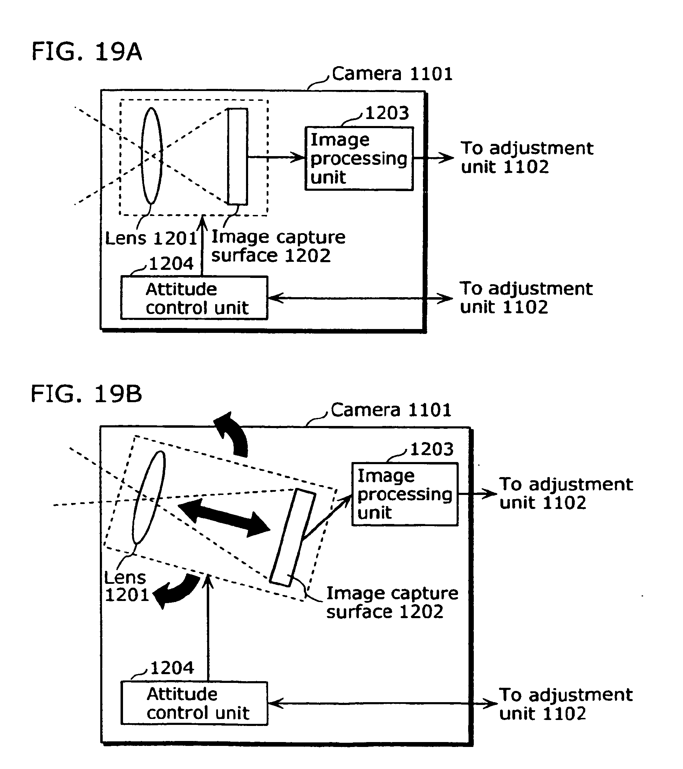

FIG. 19A is a diagram showing the internal structure of the camera PR1101. The camera PR1101 includes a lens 1201, an image capture surface 1202, an image processing unit 1203 and an attitude control unit 1204. The lens 1201 is the lens for forming images, the image capture surface 1202 is a device such as a CCD which captures an image formed on the lens 1201, the image processing unit 1203 is the processing unit which processes the image captured on the image capture surface 1202, and the attitude control unit 1204 is the processing unit which controls the attitudes of the lens 1201 and the image capture surface 1202 and the interval between the lens 1201 and the image capture surface 1202.

The lens 1201, the image capture surface 1202 and the image processing unit 1203 are respectively similar to the lens 201, the image capture surface 202 and the image processing unit 203 of FIG. 10A in the first embodiment of the present invention. This second embodiment shown in FIG. 19A differs from the first embodiment in that the attitude control unit 1204 controls not one of the attitudes of the lens 1201 and the image capture surface 1202 and the interval between the lens 1201 and the image capture surface 1202 but both of the attitudes of the lens 1201 and the image capture surface 1202 and the interval between the lens 1201 and the image capture surface 1202 at the same time. The attitude control unit 1204 controls the attitudes of the lens 1201 and the image capture surface 1202 which is a control generally called pan or tilt and the interval between the lens 1201 and the image capture surface 1202 which is a control generally called zoom at the same time as shown in FIG. 19B.

The operations of the detection range adjustment device in the second embodiment of the present invention will be described below with reference to FIG. 18. In the camera terminals PR1110A to PR1110C, the camera PR1101 determines its imaging range, as its detection range, based on the attitudes of the lens 1201 and the image capture surface 1202 on the real space surface and the respective intervals, and it performs an operation of detecting a target detection object or extracting information. The information of the detected target detection object is sent to the adjustment unit 1102 in FIG. 18. Further, in the camera PR1101, the attitude control unit 1204 shown in FIG. 19A adjusts the position of the detection range of the camera PR1101 to the position of the detection range indicated by the adjustment unit 1102 in FIG. 18 by controlling the attitudes of the lens 1201 and the image capture surface 1202, and the interval between the lens 1201 and the image capture surface 1202. Additionally, the attitude control unit 1204 sends, to the adjustment unit 1102, the position information of the detection range of the current camera PR1101 which is determined based on the attitudes of the current lens 1201 and the image capture surface 1202 and the interval between the lens 1201 and the image capture surface 1202.

Operations described up to this point are similar to the operations of the camera terminals P110A to P110C in the first embodiment of the present invention. Further, in the second embodiment of the present invention, the attitude control unit 1204 adjusts the spatial resolution of the detection range of the camera PR1101 to the spatial resolution of the detection range specified by the adjustment unit 1102 in FIG. 18, by controlling the interval between the lens 1201 and the image capture surface. Also, the attitude control unit 1204 sends the spatial resolution of the detection range of the current camera PR1101 determined based on the interval between the current lens 1201 and the image capture surface 1202 to the adjustment unit 1102.

In this way, in the second embodiment similar to the first embodiment of the present invention, the position of the detection range of the camera PR1101 is controlled by the adjustment unit 1102, the position information of the detection range of the current camera PR1101 is sent to the adjustment unit 1102. Additionally, in this second embodiment of the present Invention, the spatial resolution of the detection range of the camera PR1101 is controlled by the adjustment unit 1102 and the spatial resolution information of the detection range of the current camera PR1101 is sent to the adjustment unit 1102.

The adjustment unit 1102 periodically sends the position information and the spatial resolution information of the detection range of the camera PR1101 sent from the camera PR1101 to the adjustment unit 1102 via the communication unit 1103 and the network 1112. Additionally, the adjustment unit 1102 receives the position information and the spatial resolutions of the detection ranges of the cameras PR1101 in the other camera terminals PR which are periodically sent from the adjustment units 1102 in the other camera terminals PR. Further, in the operation terminals 1111L and 1111R, the communication units 1103 periodically send the position information of the target detection range 1130 to the adjustment units 1102 in the camera terminals PR1110A to PR1110C through the network 1112.

The operations that the adjustment units 1102 and the communication units 1103 in the camera terminals PR1110A to PR1110C and the operation terminals 1111L and 1111R communicate the position information of the detection ranges have been described up to this point as the first embodiment of the present invention. Further, in the second embodiment of the present invention, the adjustment units 1102 and the communication units 1103 in the camera terminals PR1110A to PR1110C communicate the spatial resolutions of the detection ranges.

Therefore, the adjustment units 1102 in the camera terminals PR1110A to PR1110C periodically obtain the position information and the spatial resolution information of the detection ranges of the cameras PR1101 in the current camera terminal P and the other camera terminals P and the position information of the target detection range. Similar to the first embodiment of the present invention, the adjustment units 1102 periodically obtain $X_{AL}$ and $X_{AR}$ indicating the position of the detection range 1140A of the camera terminal PR1110A, $X_{BL}$ and $X_{BR}$ indicating the position of the detection range 1140B of the camera terminal PR1110B, $X_{CL}$ and $X_{CR}$ indicating the position of the detection range 1140C of the camera terminal PR1110C, and $X_{TL}$ and $X_{TR}$ indicating the position of the target detection range 1130 via the communication units 1103 and the network 1112. Further, in the second embodiment of the present invention, the adjustment units 1102 periodically obtain $R_A$ which is the spatial resolution of the detection range 1140A of the camera terminal PR1110A, $R_B$ which is the spatial resolution of the detection range 1140B of the camera terminal PR110B, $R_C$ which is the spatial resolution of the detection range 1140C of the camera terminal PR1110 via the communication units 1103 and the network 1112.

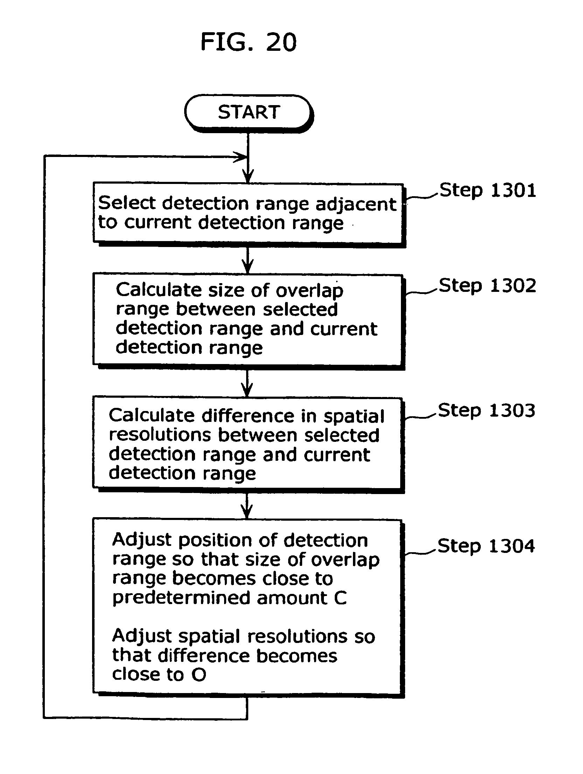

Further, the adjustment units 1102 perform the processing of the following step shown in FIG. 20 based on the position information and the spatial resolutions of the obtained detection ranges and the position information of the target detection range.

First, the adjustment units 1102 select the detection ranges of the other camera terminals PR which are adjacent to the detection range of the current camera terminal PR or an undetectable range based on the information indicating the detection range positions of the cameras PR1101 in the current camera terminal PR and the other camera terminals PR (Step 1301). This processing is similar to the first embodiment of the present invention.

Next, the adjustment units 1102 calculate the amount indicating the size of the overlap ranges of the detection ranges selected in Step 1301 and the detection range of the current camera terminal P (Step 1302). This processing is similar to the processing in the first embodiment of the present invention.

Next, the adjustment units 1102 calculate the amount indicating the difference between the spatial resolution of the detection range selected in Step 1301 and the spatial resolution of the detection range of the current camera terminal P (Step 1303). In this way, the following amounts are calculated: the amount $R_A-R_B$ indicating the difference in the spatial resolutions in its detection range 1140A and its adjacent detection range 1140B in the camera terminal PR1110A; the amount $R_B$-$R_A$ indicating the difference in the spatial resolutions in its detection range 1140B and its adjacent detection range 1140A in the camera terminal PR1110B; the amount $R_B$-$R_C$ indicating the difference in the spatial resolutions in its detection range 1140B and its adjacent detection range 1140C in the camera terminal PR1110B; and the amount $R_C$-$R_B$ indicating the difference in the spatial resolutions in its detection range 1140C and its adjacent detection range 1140B in the camera terminal PR1110C.

Next, the adjustment units 1102 adjust the detection range position of the current camera terminal PR so that the amount indicating the size of the overlap ranges calculated in Step 1303 becomes close to the certain amount C (Step 1304). This processing is similar to the processing in the first embodiment of the present invention. Further, in the second embodiment of the present invention, each adjustment unit 1102 adjusts the spatial resolution of the detection range of the current camera terminal PR so that the amounts indicating the differences in the spatial resolutions of the detection ranges calculated in Step 1303 become close to 0. This adjustment method will be described below.

First, the function UR() is determined as each amount indicating the difference in the spatial resolutions of the detection ranges. In this second embodiment, the values indicated in the following equation 13 to equation 15 are determined as such function UR().

**[Mathematical Expression 13]**

$$UR_{AR}(R_A) = (R_A - R_B)^2 \quad UR_{AR}(R_A) = (R_A - R_B)^2 \quad \text{(Equation 13)}$$

**[Mathematical Expression 14]**

$$UR_{BL}(R_B) = (R_B - R_A)^2 \quad UR_{BR}(R_B) = (R_B - R_C)^2 \quad \text{(Equation 14)}$$

**[Mathematical Expression 15]**

$$UR_{CL}(R_C) = (R_C - R_B)^2 \quad \text{(Equation 15)}$$

The above-mentioned equation 13 to equation 15 correspond to the camera terminals PR1110A to PR1110C respectively, the square values of the amounts indicating the differences in the spatial resolutions of the detection ranges are determined as the amounts indicating the respective differences. Next, as shown in the following equation 16 to equation 18, the spatial resolution of the next detection range of the current camera terminal PR is calculated using the equation of the well-known steepest descent method.

**[Mathematical Expression 16]**

$$R_A^{'} = R_A - \alpha \frac{\partial UR_{AL}(R_A)}{\partial R_A} \quad \text{(Equation 16)}$$

**[Mathematical Expression 17]**

$$R_B^{\cdot} = R_B - \alpha \frac{\partial(UR_{BL}(R_B) + UR_{BR}(R_B))}{\partial R_B} \quad \text{(Equation 17)}$$

**[Mathematical Expression 18]**

$$R_C^{\cdot} = R_C - \alpha \frac{\partial UR_{CR}(R_C)}{\partial R_C} \quad \text{(Equation 18)}$$

In the above equation 16 to equation 18, R'A, R'B and R'C respectively show the next spatial resolutions of the detection ranges of the camera terminals PR1110A to PR1110C, and $\alpha$ is a constant. Lastly, the spatial resolutions of the detection ranges of the cameras PR1101 are adjusted to the next spatial resolutions of the detection ranges.

The adjustment units 1102 perform the processing of Step 1301, Step 1302, Step 1303 and Step 1304 in sequence, and return to the processing of Step 1301 after completing the processing of Step 1304. Subsequently, the adjustment units 1102 adjust the positions of the detection ranges of the cameras PR1101 by repeating the processing of Step 1301 to Step 1304 continuously.

The operations of the detection range adjustment device in the second embodiment of the present invention are as described above. Since the operations in the second embodiment of the present invention fully include the operations in the first embodiment of the present invention, it is obvious that such operations have the same effect as the operations shown in the first embodiment of the present invention. Further, in the second embodiment of the present invention, the next spatial resolution of the detection range of the current camera terminal PR is calculated using the equation of the steepest descent method so that the amount indicating the difference in the spatial resolutions of the detection ranges becomes close to 0 and the spatial resolutions of the detection ranges of the cameras PR1101 are adjusted to the next spatial resolutions of the detection ranges in Step 1303. Therefore, these spatial resolutions of the detection ranges of the camera terminals PR1110A to PR1110C are to become the same by repeating the processing of Step 1301 to Step 1304. Therefore, with the detection range adjustment device of the present invention, it becomes possible to obtain respective images that have the same spatial resolutions and that are captured by the cameras PR1101 in the camera terminals PR1110A to PR1110C. Additionally, that the spatial resolutions of the detection ranges of the camera terminals PR1110A to PR1110C are the same means that the numbers of devices of the image capture surfaces 1202 of the camera terminals PR1110A to PR1110C are also the same in this embodiment, and also means the sizes of the detection ranges to be detected by the camera terminals PR1110A to PR1110C are the same.

Additionally, there produced an effect that the adjustment units 1102 can obtain the respective cameras' images whose spatial resolutions are the same by repeating the processing of Step 1301 to Step 1304. The processing of Step 1302 and Step 1304 is repeatedly performed on the detection ranges of the other cameras PR which are adjacent to the detection range of the current camera terminal PR selected in Step 1301.

Therefore, there produced the effect that it becomes possible to obtain the respective cameras' images whose spatial resolutions are the same in response to the following change even in the case where there is a change at respective time in the spatial resolutions of the detection ranges of the other cameras PR which are adjacent to the detection range of the current camera terminal PR. The cases where there occurs a change in the spatial resolutions of the detection ranges are as follows:

(1) the spatial resolution of the detection range of the camera terminal PR is adjusted;
(2) a camera terminal PR is newly set; and
(3) several camera terminals PR among all camera terminals PR are removed or broken.

The operations of the present invention in response to the change will be described later in detail in supplementary explanation 3 and supplementary explanation 4. In brief, the change leads to the change in the spatial resolution information of the detection ranges to be sent by the respective camera terminals PR. Additionally, even in the case where the spatial resolution information of the detection ranges are not sent or new spatial resolution information of the detection ranges are sent, the detection range adjustment device of the present invention can obtain respective cameras' images whose spatial resolutions are the same in response to the change in the spatial resolutions of the detection ranges.

Note that, in this second embodiment, as shown in the above-mentioned equation 13 to equation 15, each function UR() indicating the difference in the spatial resolutions of the detection ranges is determined as the square value of the difference in the spatial resolutions of the detection ranges. However, similar to the first embodiment of the present invention, a similar effect can be obtained also in the case of employing, as the function UR(), any of (i) an even power value such as a four power, a six power, and a ten power of the difference in the spatial resolutions of the detection ranges and (ii) an absolute value of the difference in the spatial resolutions of the detection ranges. This is because the function UR() has the smallest value when $R_A - R_B$ is equal to 0, which enables the amount indicating the difference in the spatial resolutions of the detection ranges to become close to 0 as the effect of the steepest descent method performed in Step 1304.

Additionally, similar to the first embodiment of the present invention, even in the case where the function UR() indicating the difference in the spatial resolutions of the detection ranges is the function UR() having not the smallest value but the minimum value when $R_A - R_B$ is equal to 0, a similar effect can be obtained as long as the function UP() is the smallest value when $R_A - R_B$ is equal to 0 in the changeable range of $R_A - R_B$.

Additionally, in the second embodiment, as shown in FIG. 18, the adjustment units 1102 are present in the respective camera terminals P1110A to P1110C in a decentralized way. However, also in the case of the detection range adjustment device which has a single adjustment unit 1102 shown in the block diagram of FIG. 15, a similar effect can be obtained as long as the single adjustment unit 1102 adjusts all the spatial resolutions of the detection ranges of the cameras PR1101 of the respective camera terminals PR1110A to PR1110C.

Additionally, in the second embodiment, the cameras PR1101 are handled as general cameras, but a similar effect can be obtained also in the case where the cameras PR1101 are the cameras which detect visible light or invisible light such as infrared rays and ultraviolet rays. Further, a similar effect can be obtained also in the case where the cameras PR1101 are general sensors which have detection ranges and whose spatial resolutions of the detection ranges are changeable.

Additionally, in the second embodiment of the present invention, the network 1112 is handled as the network circuit used in general communication. However, a similar effect can be obtained even in the case where the network 1112 is a wired or a wireless network.

Additionally, in the second embodiment of the present invention, the respective camera terminals perform the adjustment for matching the spatial resolution of its detection range with the spatial resolutions of the detection ranges of the other camera terminals by communicating with the other camera terminals whose detection ranges are adjacent to each other. However, the present invention is not limited to this method. Each camera terminal may fix the spatial resolution of its detection range so that the spatial resolution can be the highest spatial resolution without communicating with the other camera terminals. In this way, consequently, each set of adjacent detection ranges shares an overlap range, and all of the detection ranges have the highest spatial resolution. Therefore, with the detection range adjustment device of this embodiment, it becomes possible to entirely captures an image of, the whole target detection range, with the highest spatial resolution (a state where a detailed image can be obtained).

Next, supplementary explanation of the first embodiment and second embodiment will be made below and detailed examples of the present invention will be described.

(Supplementary Explanation 1)

In this supplementary explanation, the calculation method of the detection ranges of the camera P101 and the camera PR1101 which has been described in the first embodiment and second embodiment will be described below in detail.

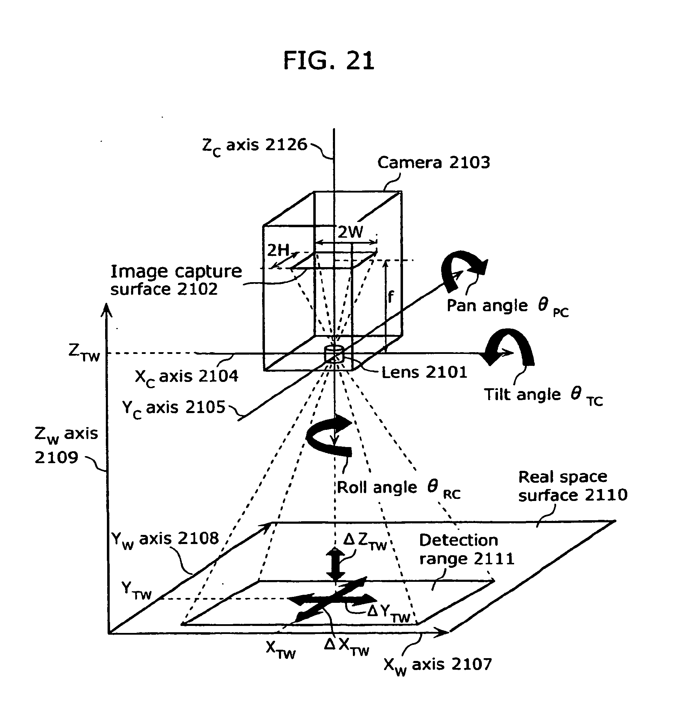

FIG. 21 is a diagram illustrating the changeable detection ranges of the camera P101 and the camera PR1101. In FIG. 21, the lens 2101 corresponds to the lens 201 shown in FIG. 10A and the lens 1201 shown in FIG. 19A, the image capture surface 2102 corresponds to the image capture surface 202 shown in FIG. 10A and the image capture surface 1202 shown in FIG. 19A, and the camera 2103 corresponds to the camera P101 shown in FIG. 10A and the camera PR1201 shown in FIG. 19A. The $X_C$ axis 2104, the $Y_C$ axis 2105 and the $Z_C$ axis 2106 are perpendicular to each other, and form a camera coordinate system whose origin is the lens 2101. The camera 2103 rotates based on the respective axes. The rotation includes pan (rotation based on the $Y_C$ axis 2105), tilt (rotation based on the $X_C$ axis 2104) and roll (rotation based on the $Z_C$ axis 2106). The respective rotation angles are shown as $\Theta_{PC}$, $\Theta_{TC}$ and $\Theta_{RC}$. The image capture surface 2102 is present at the point which is distant from the lens 2101 by f in the direction of $Z_C$ axis 2106, and has a size of $2W \times 2H$. The $X_W$ axis 2107, the $Y_W$ axis 2108 and the $Z_W$ axis 2109 are perpendicular to each other, and form a world coordinate system. The $X_W$ axis 2107 corresponds to the $X_W$ axis 120 shown in FIG. 8 and the $X_W$ axis 1120 shown in FIG. 18. The $Z_W$ axis 2109 corresponds to the $Z_W$ axis 122 shown in FIG. 8 and the $Z_W$

axis 1122 shown in FIG. 18. The camera 2103 is present at the point which is shown using $(X_T, Y_T, Z_T)$ in the world coordinate system, and it moves from the point by $(\Delta X_{TW}, \Delta Y_{TW}, \Delta Z_{TW})$ starting with $(X_T, Y_T, Z_T)$.

The point $(X_C, Y_C, Z_C)$ on the camera coordinate axis system composed of the $X_C$ axis 2104, the $Y_C$ axis 2105 and the $Z_C$ axis 2106 can be converted to the point $(X_W, Y_W, Z_W)$ on the world coordinate axis system composed of the $X_W$ axis 2107, the Yw axis 2108 and the $Z_W$ axis 2109 using the following equation 19:

## [Mathematical Expression 19]

$$\begin{pmatrix} X_W \\ Y_W \\ Z_W \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} X_C \\ Y_C \\ Z_C \end{pmatrix} + \begin{pmatrix} X_{TW} \\ Y_{TW} \\ Z_{TW} \end{pmatrix} + \begin{pmatrix} \Delta X_W \\ \Delta Y_W \\ \Delta Z_W \end{pmatrix} \quad \text{(Equation 19)}$$

In the equation 19, the $3 \times 3$ matrix whose elements are $M_{00}$ to $M_{22}$ shows the matrix value of the angle bench mark (rotation angles $(\ominus_{PC}, \ominus_{TC}, \ominus_{RC})=(0, 0, 0)$ of the camera 2103) of the camera 2103. The $3 \times 3$ matrix value whose elements are $R_{00}$ to $R_{22}$ shows the matrix value indicating the angle variation from the angle bench mark of the camera 2103. $(X_{TW}, Y_{TW}, Z_{TW})$ shows the position of the position bench mark (the variation of the position of the camera 2103 which is $(\Delta X_{TW}, \Delta Y_{TW}, \Delta Z_{TW})=(0, 0, 0)$ of the camera 2103. $(\Delta X_{TW}, \Delta Y_{TW}, \Delta Z_{TW})$ shows the position variation from the position bench mark of the camera 2103.

The $3 \times 3$ matrix value whose elements are $M_{00}$ to $M_{22}$ or $(X_{TW}, Y_{TW}, Z_{TW})$ can be calculated by adjusting the angle and the position of the current camera 2103 to the angle bench mark and the position bench mark, or by determining the angle and the position of the current camera 2103 as the angle bench mark and the position bench mark respectively and by using the calibration method shown in the following Document 1. The $3 \times 3$ matrix value should be calculated before the detection range adjustment device of the present invention starts operating.

Document 1: A Versatile Camera Calibration Technique for High-Accuracy 3D Machine Vision Metrology Using Off-the-Shelf TV Cameras and Lenses., R. Tsai., IEEE journal of Robotics and Automation, Vol. RA-3, No. 4, pp. 323-344, 1987

The $3 \times 3$ matrix value whose elements are $R_{00}$ to $R_{22}$ can be calculated from the rotation angles $(\ominus_{PC}, \ominus_{TC}, \ominus_{RC})$ which are the angles of the camera 2103, as shown in the following equation 20.

## [Mathematical Expression 20]

$$\begin{pmatrix} R_{00} & R_{01} & R_{02} \\ R_{10} & R_{11} & R_{12} \\ R_{20} & R_{21} & R_{22} \end{pmatrix} = \begin{pmatrix} \cos\Theta_{RC} & \sin\Theta_{RC} & 0 \\ -\sin\Theta_{RC} & \cos\Theta_{RC} & 0 \\ 0 & 0 & 0 \end{pmatrix} \begin{pmatrix} 1 & 0 & 0 \\ 0 & \cos\Theta_{TC} & \sin\Theta_{TC} \\ 0 & -\sin\Theta_{TC} & \cos\Theta_{TC} \end{pmatrix} \begin{pmatrix} \cos\Theta_{PC} & 0 & -\sin\Theta_{PC} \\ 0 & 1 & 0 \\ \sin\Theta_{PC} & 0 & \cos\Theta_{PC} \end{pmatrix}$$

(Equation 20)

Note that the rotation angles $(\ominus_{PC}, \ominus_{TC}, \ominus_{RC})$ are read by the attitude control unit 204 shown in FIG. 10A and the attitude control unit 1204 shown in FIG. 19A respectively in the first embodiment and second embodiment of the present invention.

Additionally, $(\Delta XT_W, \Delta Y_{TW}, \Delta Z_{TW})$ which is the position variation from the position bench mark of the camera 2103 can be read by a stepper motor on condition that there is a mechanism of changing the position of the camera 2103 using the stepper motor adjusts.

The respective points $(X_{PC}, Y_{PC}, f)$ on the image capture surface 2102 are projected at $Z_W=C$ on the real space surface 2110 using the following equation 21.

## [Mathematical Expression 21]

$$\begin{pmatrix} X_{PW} \\ Y_{PW} \\ Z_{PW} \end{pmatrix} = \begin{pmatrix} X_O + \dfrac{(Z_O - Z_C)X_D}{Z_D} \\ Y_O + \dfrac{(Z_O - Z_C)Y_D}{Z_D} \\ Z_C \end{pmatrix}$$

$$\begin{pmatrix} X_O \\ Y_O \\ Z_O \end{pmatrix} = \begin{pmatrix} X_{TW} \\ Y_{TW} \\ Z_{TW} \end{pmatrix} + \begin{pmatrix} \Delta X_W \\ \Delta Y_W \\ \Delta Z_W \end{pmatrix}$$

$$\begin{pmatrix} X_D \\ Y_D \\ Z_D \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} X_{PC} \\ Y_{PC} \\ f \end{pmatrix}$$

## (Equation 21)

Therefore, the respective points of the four corners on the image capture surfaces (-W, -H, f), (W, -H, f), (-W, H, f), (W, H, f) are projected at $Z_w$=C on the real space surface 2110 using the following equation 22.
## [Mathematical Expression 22]

$$\begin{pmatrix} X_{PW0} \\ Y_{PW0} \\ Z_{PW0} \end{pmatrix} = \begin{pmatrix} X_O + \dfrac{(Z_O - Z_C)X_{D0}}{Z_{D0}} \\ Y_O + \dfrac{(Z_O - Z_C)Y_{D0}}{Z_{D0}} \\ Z_C \end{pmatrix} \qquad \begin{pmatrix} X_{D0} \\ Y_{D0} \\ Z_{D0} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} -W \\ -H \\ f \end{pmatrix}$$

$$\begin{pmatrix} X_{PW1} \\ Y_{PW1} \\ Z_{PW1} \end{pmatrix} = \begin{pmatrix} X_O + \dfrac{(Z_O - Z_C)X_{D1}}{Z_{D1}} \\ Y_O + \dfrac{(Z_O - Z_C)Y_{D1}}{Z_{D1}} \\ Z_C \end{pmatrix} \qquad \begin{pmatrix} X_{D1} \\ Y_{D1} \\ Z_{D1} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} W \\ -H \\ f \end{pmatrix}$$

$$\begin{pmatrix} X_{PW2} \\ Y_{PW2} \\ Z_{PW2} \end{pmatrix} = \begin{pmatrix} X_O + \dfrac{(Z_O - Z_C)X_{D2}}{Z_{D2}} \\ Y_O + \dfrac{(Z_O - Z_C)Y_{D2}}{Z_{D2}} \\ Z_C \end{pmatrix} \qquad \begin{pmatrix} X_{D2} \\ Y_{D2} \\ Z_{D2} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} -W \\ H \\ f \end{pmatrix}$$

$$\begin{pmatrix} X_{PW3} \\ Y_{PW3} \\ Z_{PW3} \end{pmatrix} = \begin{pmatrix} X_O + \dfrac{(Z_O - Z_C)X_{D3}}{Z_{D3}} \\ Y_O + \dfrac{(Z_O - Z_C)Y_{D3}}{Z_{D3}} \\ Z_C \end{pmatrix} \qquad \begin{pmatrix} X_{D3} \\ Y_{D3} \\ Z_D \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} W \\ H \\ f \end{pmatrix}$$

## (Equation 22)

The surface which constitutes the four corner points of the image capture surface which is projected at $Z_w$=C on the real space surface 2110 is the detection range of the camera 2103. Since the real space surface 2110 is especially determined as $Z_w$= 0 in the first embodiment and second embodiment of the present invention, the detection range of the camera 2103 can be calculated using the following equation 23.
## [Mathematical Expression 23]

$$\begin{pmatrix} X_{PW0} \\ Y_{PW0} \\ Z_{PW0} \end{pmatrix} = \begin{pmatrix} X_O + \dfrac{Z_O X_{D0}}{Z_{D0}} \\ Y_O + \dfrac{Z_O Y_{D0}}{Z_{D0}} \\ 0 \end{pmatrix} \qquad \begin{pmatrix} X_{D0} \\ Y_{D0} \\ Z_{D0} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} -W \\ -H \\ f \end{pmatrix}$$

$$\begin{pmatrix} X_{PW1} \\ Y_{PW1} \\ Z_{PW1} \end{pmatrix} = \begin{pmatrix} X_O + \dfrac{Z_O X_{D1}}{Z_{D1}} \\ Y_O + \dfrac{Z_O Y_{D1}}{Z_{D1}} \\ 0 \end{pmatrix} \qquad \begin{pmatrix} X_{D1} \\ Y_{D1} \\ Z_{D1} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} W \\ -H \\ f \end{pmatrix}$$

$$\begin{pmatrix} X_{PW2} \\ Y_{PW2} \\ Z_{PW2} \end{pmatrix} = \begin{pmatrix} X_O + \dfrac{Z_O X_{D2}}{Z_{D2}} \\ Y_O + \dfrac{Z_O Y_{D2}}{Z_{D2}} \\ 0 \end{pmatrix} \qquad \begin{pmatrix} X_{D2} \\ Y_{D2} \\ Z_{D2} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} -W \\ H \\ f \end{pmatrix}$$

$$\begin{pmatrix} X_{PW3} \\ Y_{PW3} \\ Z_{PW3} \end{pmatrix} = \begin{pmatrix} X_O + \dfrac{Z_O X_{D3}}{Z_{D3}} \\ Y_O + \dfrac{Z_O Y_{D3}}{Z_{D3}} \\ 0 \end{pmatrix} \qquad \begin{pmatrix} X_{D3} \\ Y_{D3} \\ Z_{D} \end{pmatrix} = \begin{pmatrix} R_{00} & R_{01} & R_{02} \\ R_{10} & R_{11} & R_{12} \\ R_{20} & R_{21} & R_{22} \end{pmatrix} \begin{pmatrix} M_{00} & M_{01} & M_{02} \\ M_{10} & M_{11} & M_{12} \\ M_{20} & M_{21} & M_{22} \end{pmatrix} \begin{pmatrix} W \\ H \\ f \end{pmatrix}$$

## (Equation 23)

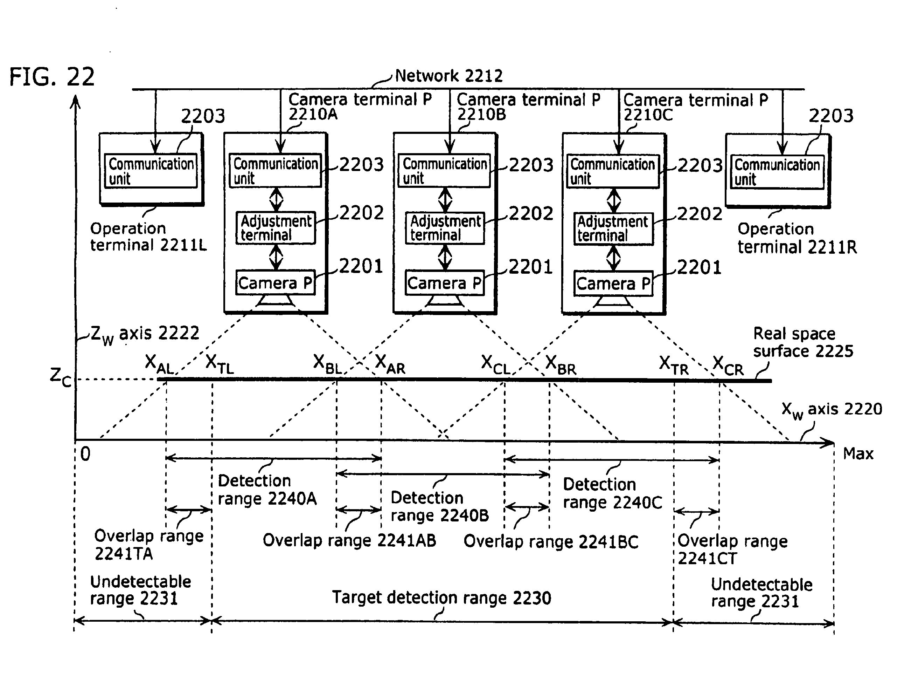

Note that FIG. 22 is a block diagram of the structure of the detection range adjustment device of the present invention in the case where the real space surface 2210 similar to the ones in FIG. 8 and FIG. 18 is determined as $Z_w$=C. The real space surface 2110 is determined as Zw = 0 in the first embodiment and second embodiment of the present invention. Even in the case where the real space surface 2110 is determined as $Z_w$=C, the detection range position of the camera 2103 can be calculated using the following equation 22. As shown in this FIG. 22, determining the real space surface 2210 as Zw = C makes it possible to detect the target detection range 2230 having a width ranging from Zw=0 to Zw=C without leaving any dead ranges, using respective camera terminals P.

The calculation method of the detection ranges of the camera P101 and the camera PR1101 have been described up to this point, but other than that, there is a method where the camera P101 and the camera PR1101 use devices such as laser pointers which send detectable signals. This example is shown below.

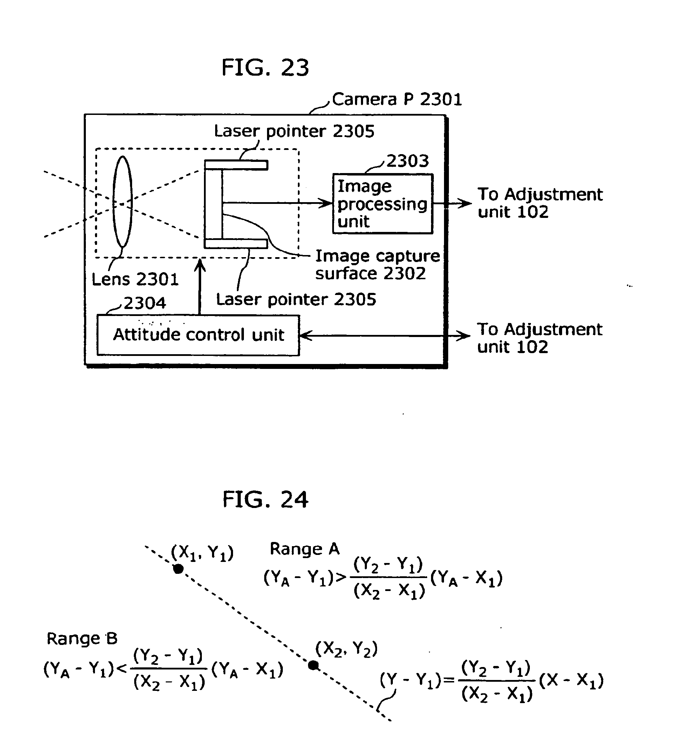

FIG. 23 is a diagram showing the internal structure of the camera P2301 including a laser pointer. This camera P2301 includes a lens 2301, an image capture surface 2302, an imaging processing unit 2303, an attitude control unit 2304 and a laser pointer 2305. The lens 2301 is the lens for forming images. The image capture surface 2302 is a device such as a CCD which captures an image formed on the lens 2301. The imaging processing unit 2303 is the processing unit which processes the image captured on the image capture surface 2302. The attitude control unit 2304 is the processing unit which controls the attitudes of the lens 2301, the image capture surface 2302 and the laser pointer 2305, and the interval between the lens 2301 and the image capture surface 2302. The laser pointer 2305 is intended for making the attitude control unit 2304 change these attitudes working with the lens 2301 and the image capture surface 2302, and projects a laser at edges of the detection range of the camera P2301.

The lens 2301, the image capture surface 2302, the imaging processing unit 2303 are similar to the lens 201, the image capture surface 202 and the imaging processing unit 203 of FIG. 10A in the first embodiment of the present invention. The difference from the first embodiment of the present invention is that the attitude control unit 2304 controls the attitudes of not only the lens 2301 and the image capture surface 2302 but also the laser pointer 2305, and this enables the laser pointer 2305 to project a laser at the edges of the detection range of the camera P2301.

In the camera P2301 shown in FIG. 23, the laser pointer 2305 projects a laser to show the edges of the detection range of the camera. The laser is projected on the real space surface 125 shown in FIG. 8 and light spots appear on the surface. The light spots show the edges of the camera P2301. The other cameras, which are adjacent to the camera, capture images of the light spots, and extract the positions of the light spots, in the image processing unit 2303, using a general image processing method. The positions of the light spots extracted in the imaging processing unit 2303 are the positions in the camera coordinate axis system, but the positions in the world coordinate axis system can also be calculated using the above-mentioned equation 19 as shown in the supplementary explanation 1. As described up to this point, with the camera P2301 shown in FIG. 23, it is possible to calculate the position of the detection range and communicate the position information of the detection range to the other cameras which are adjacent to the current camera and which need the position information of the detection range of the current camera P2301 without using the network 112 shown in FIG. 8.

(Supplementary Explanation 2)

In this supplementary explanation, the following method will be further described below in detail: the method where the detection ranges of the other camera terminals P which are adjacent to the detection range of the current camera terminal P or the undetectable range is selected based on the information indicating the detection range positions of the cameras P101 of the current camera terminal P and the other camera terminals P.

In the first embodiment of the present invention, the case where the detection range is a line has been described as an example. The case where the detection range is a surface or a three-dimensional object will be described below.

FIG. 24 is a diagram indicating a straight line side at which the point $(X_A, Y_A)$ is present, with respect to the straight line passing through the point $(X_1, Y_1)$ and the point $(X_2, Y_2)$. The straight line which passes through the point $(X_1, Y_1)$ and the point $(X_2, Y_2)$ can be represented using the following equation 24.

[Mathematical Expression 24]

$$(Y - Y_1) = \frac{(Y_2 - Y_1)}{(X_2 - X_1)}(X - X_1) \quad \text{(Equation 24)}$$

Subsequently, the following equation 25 shows the relationship in the case where the point $(X_A, Y_A)$ is present in the A side of the straight line. Likewise, the following equation 26 shows the relationship in the case where the point $(X_A, Y_A)$ is present in the B side of the straight line.

[Mathematical Expression 25]

$$(Y_A - Y_1) > \frac{(Y_2 - Y_1)}{(X_2 - X_1)}(X_A - X_1) \quad \text{(Equation 25)}$$

## [Mathematical Expression 26]

$$(Y_A - Y_1) < \frac{(Y_2 - Y_1)}{(X_2 - X_1)}(X_A - X_1) \quad \text{(Equation 26)}$$

These relationships enable judging a side, of the straight line which passes through the already-known two points, at which the point to be judged is present. By determining two points which have already been known as the apexes of the detection range of the camera P101 of the current camera terminal P and also by determining the point to be judged as the gravity position of the detection range of the camera P101 in each of the other camera terminals P, it becomes possible to judge a side, of the detection range of the current camera terminal P, at which the detection range of the camera P101 in each of the other camera terminals P is present.

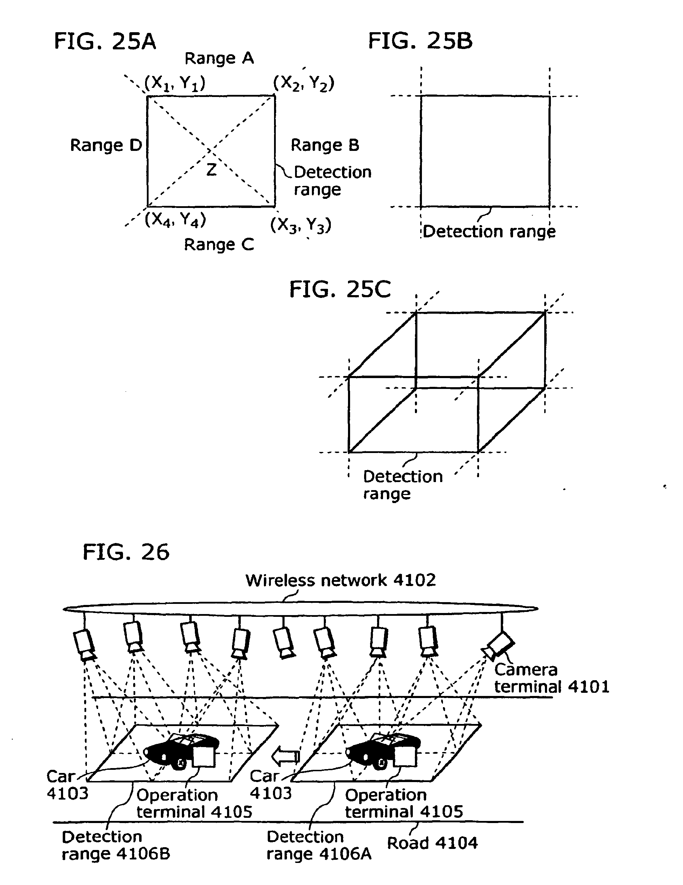

FIG. 25A and FIG. 25B are examples in the case where the detection ranges are surfaces. FIG. 25C is an example in the case where the detection range is a three-dimensional object.

In FIG. 25A, the apex $(X_1, Y_1)$ of the detection range of the camera P101 of the current camera terminal P and the straight line which passes through the apex $(X_3, Y_3)$ are shown by the following equation 27, and the apex $(X_2, Y_2)$ and the line which passes through the apex $(X_4, Y_4)$ are shown by the following equation 28.

## [Mathematical Expression 27]

$$(Y - Y_1) = \frac{(Y_3 - Y_1)}{(X_3 - X_1)}(X - X_1) \quad \text{(Equation 27)}$$

## [Mathematical Expression 28]

$$(Y - Y_2) = \frac{(Y_4 - Y_2)}{(X_4 - X_2)}(X - X_2) \quad \text{(Equation 28)}$$

Note that the positions of the respective apexes of the detection range can be calculated using the earlier-mentioned equation 19. Additionally, the gravity position of the camera P101 in each of the other terminals P can be easily calculated in the case where the apex positions of the detection range of the camera P101 in each of the other camera terminals P are known, and the gravity position is determined as $(X_C, Y_C)$. Based on the above-mentioned relationships, on condition that the gravity position $(X_C, Y_C)$ is present at the A side of the range, in other words, on condition that the detection range of the camera P101 of one of the other camera terminals P is adjacent to the A side of the detection range of the camera P101 in the current camera terminal P, the relationships of the following equation 29 and equation 31 are satisfied.

On condition that the gravity position $(X_C, Y_C)$ is present at the B side of the range, in other words, on condition that the detection range of the camera P101 in one of the other camera terminals P is adjacent to the B side of the detection range of the camera P101 in the current camera terminal P, the relationships of the following equation 29 and equation 32 are satisfied.

On condition that the gravity position $(X_C, Y_C)$ is present at the C side of the range, in other words, on condition that the detection range of the camera P101 of one of the other camera terminals P is adjacent to the C side of the detection range of the camera P101 in the current camera terminal P, the relationships of the following equation 30 and equation 32 are satisfied.

[Mathematical Expression 29]

$$(Y_A - Y_1) > \frac{(Y_3 - Y_1)}{(X_3 - X_1)}(X_A - X_1) \quad \text{(Equation 29)}$$

[Mathematical Expression 30]

$$(Y_A - Y_1) < \frac{(Y_3 - Y_1)}{(X_3 - X_1)}(X_A - X_1) \quad \text{(Equation 30)}$$

[Mathematical Expression 31]

$$(Y_A - Y_2) > \frac{(Y_4 - Y_2)}{(X_4 - X_2)}(X_A - X_2) \quad \text{(Equation 31)}$$

[Mathematical Expression 32]

$$(Y_A - Y_2) < \frac{(Y_4 - Y_2)}{(X_4 - X_2)}(X_A - X_2) \quad \text{(Equation 32)}$$

On condition that the gravity position ($X_C$, $Y_C$) is present at the D side of the range, in other words, on condition that the detection range of the camera P101 in the other camera terminal P is adjacent to the D side of the detection range of the camera P101 in the current camera terminal P, the relationships of the following equation 30 and equation 31 are satisfied. In this way, the detection ranges of the other camera terminals P which are adjacent to the detection range of the current camera terminal P or the undetectable range can be selected based on the information indicating the positions of the detection ranges of the cameras P101 in the current terminal P and the other camera terminals P.
FIG. 25B differs from FIG. 25A in that each line passes through different pairs of apexes. Therefore, with a method which is similar to the method described earlier, it becomes possible to select the detection ranges of the other camera terminals P which are adjacent to the detection range of the current camera terminal P or the undetectable range based on the information indicating the detection range positions of the cameras P101 in the current camera terminal P and the other camera terminals P.
. Additionally, FIG. 25C is an example where the detection range is a three-dimensional object. As for this, it is possible to select the detection ranges of the other camera terminals P which are adjacent to the detection range of the current camera terminal P or the undetectable range which can be selected based on the information indicating the detection range positions of the cameras P101 in the current camera terminal P and the other camera terminals P.

(Supplementary Explanation 3)

In this supplementary explanation, the operation terminals of the detection range adjustment device of the present invention which have been described in the first embodiment and second embodiment of the present invention will be additionally described below.

In the first embodiment and the second embodiment of the present invention, the operation terminals 111L and 111R in FIG. 8 and the operation terminals 1111L and 1111R in FIG. 18 have the function for sending the position information of the target detection range to the camera terminals P110A to P110C in FIG. 8 and to the camera terminals P1110A to P1110C in FIG. 18 using the communication unit 103 or communication unit 1103.

Such operation terminals are needed in the case where the operation and the structure of each camera terminal which are described in the first embodiment and second embodiment of the present invention are employed, but they are not needed in the case where a target detection range information is previously set for the camera terminal.

Additionally, each operation terminal is composed of a communication unit 103 or communication unit 1103, but such communication unit is present also in each camera terminal P or each camera terminal PR. In the case where the communication unit 103 or communication unit 1103 which is present in the camera terminal P or the camera terminal PR sends the position information of the target detection range, the camera terminal P or the camera terminal PR also functions as an operation terminal. In this case, no operation terminal is needed in special.

Additionally, in the first embodiment and second embodiment of the present invention, each operation terminal sends each edge position information of the target detection range and a closed range which is enclosed by the respective edges, but the detection range adjustment device of the present invention can have a similar effect that one operation terminal sends edge position all the edge position information of the target detection range even in the case where the closed range where is enclosed by the respective positions is determined as a target detection range. Further, in the first embodiment and second embodiment of the present invention, two operation terminals send two pieces of edge position information of the target detection range, but in the case where N numbers of edges of the target detection range are present, the N numbers of operation terminals may send N pieces of edge position information respectively.

Additionally, the information of the position of the target detection range to be sent by each operation terminal has a certain value which has been previously set in the first embodiment and second embodiment of the present invention. As shown in the first embodiment and second embodiment of the present invention, the detection range adjustment device of the present invention can obtain the effect that the target detection range is detected without leaving any dead ranges in response to the following adjustment, even in the case where the position of the target detection range to be sent from each operation terminal is adjusted. Therefore, the information of the position of the target detection range to be sent by each operation terminal may be the value which temporally changes even while the detection range adjustment device of the present invention is operating.

The example of the operation, taking into consideration the details of the above-described supplementary information, of the detection range adjustment device of the present invention will be described below with reference to FIG. 26. In FIG. 26, the camera terminal 4101 is the camera terminal P or the camera terminal PR in the first embodiment and second embodiment of the present invention, and it communicates the information with the other camera terminals 4101 and the operation terminal 4105 via the wireless network 4102. The car 4103 runs on the road 4104 and mounts an operation terminal 4105. The detection ranges 4106A and 4106B are the detection ranges where the car 4103 which runs on the road 4104 is detected at respective time. The detection ranges have a certain size, centering the car position which is obtained using a GPS or a gyrocompass, and it is sent from the operation terminal 4105.

The operation of this detection range adjustment device will be described below. The camera terminals 4101 of the detection range adjustment device of the present invention are set on the road 4104, and communicate with each other via the wireless network 4102. The operation terminal 4105 set in the car 4103 which runs on the road 4104 sends the position information of the detection range, centering the present position of the car 4103 to each camera terminal 4101 via the wireless network 4102. In this way, this detection range adjustment device can always capture an image of the detection range without leaving any dead ranges, centering the position of the car 4103 which temporally changes from one minute to the next. The image information which is always captured without leaving any dead range is provided to the driver of the car 4103 via the wireless network 4102. This enables the driver of the car 4103 to obtain the information of the range around the car without leaving any dead range, which can be a help for the driver to run safely and park the car.

(Supplementary Explanation 4)

In this supplementary explanation, the specification methods of the detection ranges of the camera terminal P and the camera terminal PR of the detection range adjustment device of the present invention which has been described in the first embodiment and second embodiment of the present invention will be additionally described.

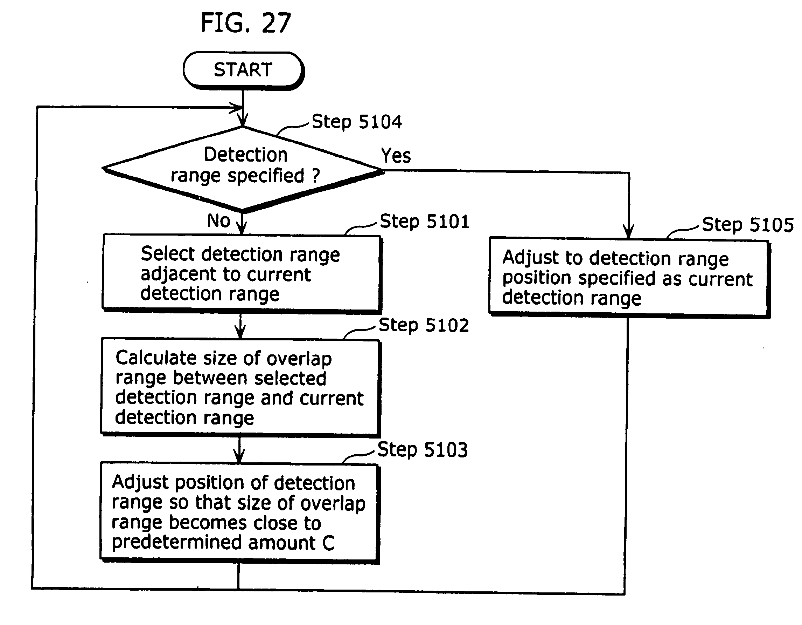

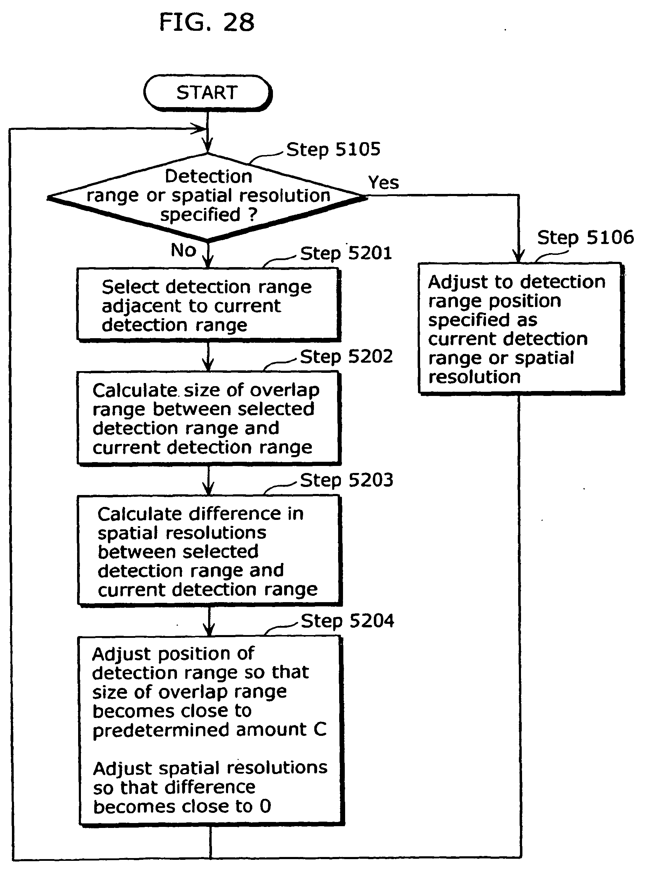

In the first embodiment and second embodiment of the present invention, the camera terminals P110A to P110C in FIG. 8 and the camera terminals P1110A to P1110C in FIG. 18 perform the operations based on the procedures of the flow charts shown in FIG. 11 and FIG. 20. In this supplementary explanation, the camera terminal P performs the operation based on the flow chart shown in FIG. 27, and the camera terminal PR performs the operation based on the flow chart shown in FIG. 28.

The flow chart shown in FIG. 27 is obtained by adding Step 5104 and Step 5105 to the flow chart shown in FIG. 11 which has been described in the first embodiment of the present invention. In the case where the judgment is No in Step 5104, in other words, in the case where the detection range is not specified, the processing from Step 5101 to Step 5103 which are the same as the ones in the first embodiment of the present invention are repeated. Therefore, the effect of the detection range adjustment device of the present invention can be obtained. The flow chart shown in FIG. 28 is obtained by adding Step 5205 and Step 5206 to the flow chart shown in FIG. 20 which has been described in the second embodiment of the present invention. In the case where the judgment is No in Step 5205, in other words, in the case where the detection range or the spatial resolution is not specified, the processing from Step 5201 to Step 5204 are repeated. The steps are the same as the ones in the second embodiment of the present invention. Therefore, the effect of the detection range adjustment device of the present invention can be obtained.

In the flow charts shown in FIG. 27 and FIG. 28, in the case where the judgment in Step 5104 or Step 5205 is Yes, in other words, the detection range is specified, in Step 5105 or Step 5206, the detection range position of the camera terminal P or the camera PR, or the spatial resolution of the detection range is adjusted to the position or the spatial resolution of the detection range which is specified in Step 5104 or Step 5205.

The position and the spatial resolution of the detection range are specified by someone in Step 5104 and Step 5205. Otherwise, the position and the size of the target detection object are detected from the images captured by the camera terminal P and the camera terminal PR, using a general image processing method in the image processing unit 203 in FIG. 10A and the image processing unit 1203 in FIG. 19A. Subsequently, the position and the spatial resolution of the detection range are specified, centering the position of the detected target and including the target detection object in the detection range.

In this way, the camera terminal P and the camera terminal PR perform such operations based on the flow charts shown in FIG. 27 and FIG. 28. In the case where there are specifications of the detection range positions or the spatial resolutions of the detection ranges of the camera terminal P and the camera terminal PR, the detection range positions or the spatial resolutions of the detection ranges are adjusted according to the specifications. In the case where there are neither specifications of the detection range positions nor the spatial resolutions of the detection ranges of the camera terminal P and the camera terminal PR, the camera terminal P and the camera terminal PR perform the operations for detecting the target detection range without leaving any dead ranges similar to the first embodiment and second embodiment of the present invention.

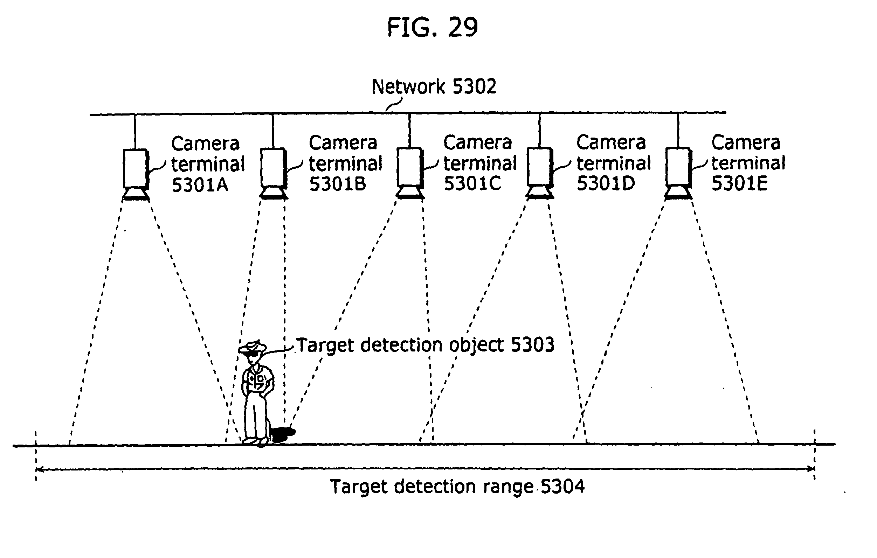

The specification method of the detection ranges of the camera terminal P and the camera terminal PR has been additionally described up to this point. Taking into consideration the additional description, the operation example of the detection range adjustment device of the present invention will be described with reference to FIG. 29 to FIG. 31.

In FIG. 29, the camera terminal 5301A to the camera terminal 5301E are the camera terminal P or the camera terminal PR in the first embodiment and the second embodiment of the present invention, and they operate based on the flow charts shown in FIG. 27 and FIG. 28. The network 5302 communicates the information between the camera terminals 5301A to 5301E. The target detection object 5303 is detected by the camera terminals 5301A to 5301E and is present in the target detection range 5304.

The operations are as follows. The camera terminals 5301A to 5301E operate based on the flow charts shown in FIG. 27 and FIG. 28. More specifically, since the camera terminal 5301B differs from the other camera terminals in that it detects the target detection object 5303, the detection range position or the spatial resolution of the detection range are specified in Step 5104 and Step 5205. The position and the spatial resolution of the detection range to be specified are the ones centering the position of the detected target object 5303 and including the target detection object 5303 in the detection range. As a result, the position and the spatial resolution of the detection range of the camera terminal 5301B are adjusted to the ones centering the position of the target detection object 5303 and including the target detection object 5303 in the detection range.

On the other hand, since the other camera terminal 5301A, camera terminal 5301C, camera terminal 5301D and camera terminal 5301E do not detect a target detection object 5303, the positions of the detection ranges are adjusted so that the respective camera terminals have overlap ranges with sizes which are the same as those of the adjacent detection ranges, similar to the first embodiment and the second embodiment of the present invention.

With the operations of the camera terminal 5301A to camera terminal 5301E as described above, also in the case where the target detection object 5303 is present in the target detection range 5304, a detailed image is automatically obtained, centering the target detection object 5303 and including the target detection object 5303 in the detection range, and the target detection range 5304 is detected always without leaving any dead ranges. As the target detection object 5303 moves, camera terminals which detect the target detection object 5303 are switched and the respective camera terminals perform a similar operation.

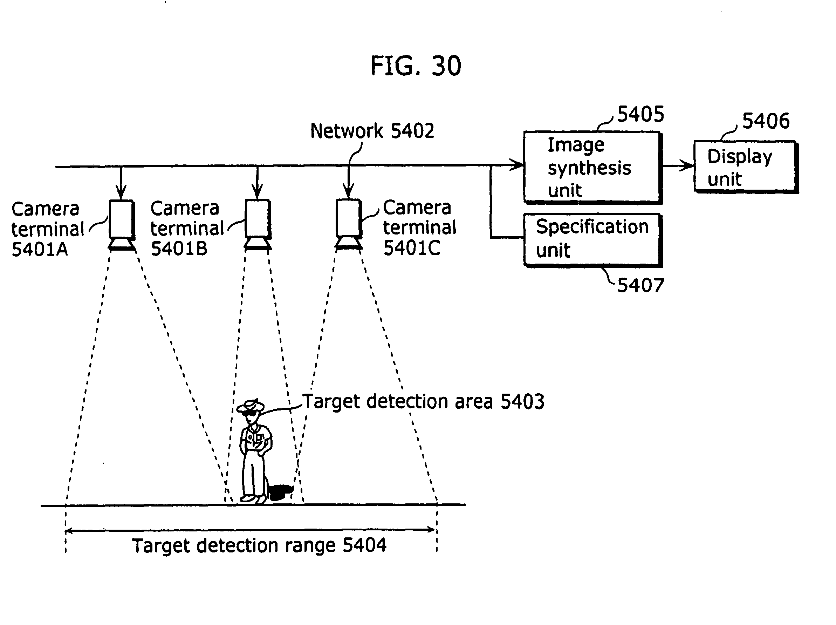

In FIG. 30, the camera terminal 5401A to camera terminal 5401E are the camera terminal P or the camera terminal PR in the first embodiment and second embodiment of the present invention, and they operate based on the flow charts shown in FIG. 27 and FIG. 28. The network 5402 communicates the information among the camera terminals 5401A to 5401C. The target detection object 5403 is detected by the camera terminals 5401A to 5401C, and is present in the target detection range 5404. What described above is similar to the case of FIG. 29. Also, in the case where the target detection object 5403 is present in the target detection range 5404, the camera terminal 5401A to camera terminal 5401C detect the target detection range 5404 always without leaving any dead ranges, and automatically obtain a detailed image, centering the position of the target detection object 5403 and including the target detection object 5403 in the detection range.

The detection range adjustment device shown in FIG. 30 is obtained by adding new processing units (an image synthesis unit 5405, a display unit 5406 and a specification unit 5407) to the detection range adjustment device of the present invention shown in FIG. 29. The image synthesis unit 5405 is intended for synthesizing respective images obtained by the camera terminals 5401A to 5401C into a single image and the like, the display unit 5406 is intended for displaying images synthesized by the image synthesis unit 5405, and the specification unit 5407 is intended for specifying the detection ranges or the spatial resolutions of the detection ranges of the camera terminals 5401A to 5401C.

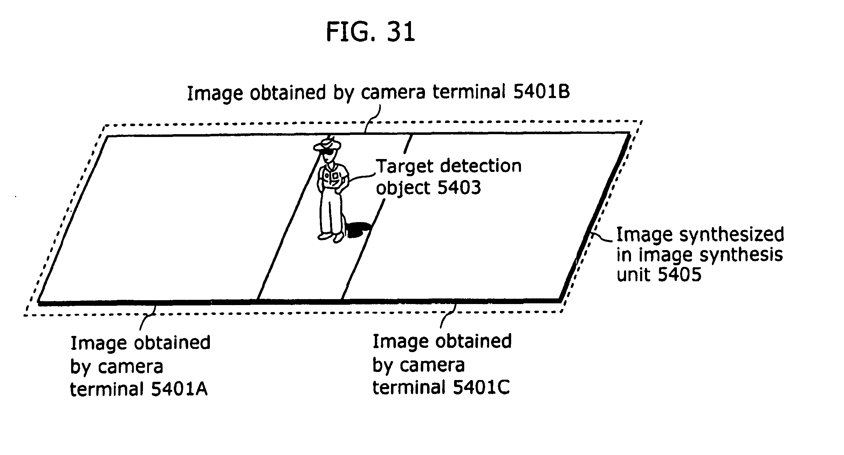

The operations of the detection range adjustment device like this are as follows. More specifically, the image synthesis unit 5405 receives images captured by the camera terminals 5401A to 5401C and the position information of the detection ranges to be sent by the camera terminals 5401A to 5401C via the network 5402. The image synthesis unit 5405 synthesizes images whose spatial positions are continuous, for example, the images captured by the respective camera terminals and shown in FIG. 31 using the information of the positions of the detection ranges of the camera terminals. The synthesized images are displayed on the display unit 5406 and the image information is presented to someone. Note that images obtained by the camera terminals 5401A to 5401C which are used for synthesis in the image synthesis unit 5405 and the positions of pixels which constitute the images in the world coordinate axis system can be calculated using the above-mentioned equation 19. Therefore, the use of a general projection conversion method makes it possible to synthesize images whose spatial positions from various view points are continuous in the image synthesis unit 5405.

Someone who has seen the synthesized image which is displayed on the display unit 5406 inputs the information indicating the range position on the desired synthesis image or the spatial resolution to the specification unit 5407. The position or the spatial resolution of the range is specified by a pointing device or the like in input. The receiving unit 5407 receives the position or the spatial resolution of the range specified by someone, and determines a camera terminal whose current detection range is in the detection range. The judgment can be easily made using detection range information to be sent by the camera terminals 5401A to 5401C. Subsequently, the specification unit 5407 specifies, via the network 5402, the position or the spatial resolution of the range specified by someone, as the detection range position or the spatial resolution of the detection range of the camera terminal, to the camera terminal whose detection range includes the range specified by someone who made the above-mentioned determination. As to the camera terminal whose detection range position or the spatial resolution of the detection range is specified, the detection range position or the spatial resolution of the detection range is adjusted according to the specification.

With the operations described up to this point, someone can receive the information of the target detection range 5404 always without leaving any dead ranges, from various view points, and as information of the images whose spatial positions are continuous. Further, it also becomes possible to obtain images having specific range positions or spatial resolutions, based on the detection position specified based on the image information or by specifying spatial resolutions. For example, when someone makes an input, to the specification unit 5407 in order to improve the spatial resolution of a range, an image, captured in the range, whose spatial resolution is high is to be displayed on the display unit 5406. This effect is useful in monitoring a building and the like which has a large target detection range.

In the examples shown in FIG. 29 to FIG. 31, control has been performed so that the position and the size of the detection range of one camera terminal which captures an image a target detection object are fixed (the state where the spatial resolution is highest) and the detection ranges of the camera terminals including the one camera terminal are overlapped each other. However, as another method which enables obtaining a similar result, control may be performed so as to fix the position and the size of the detection range of one camera terminal which captures an image a target detection object (the state where the spatial resolution is highest) and the detection ranges of the other camera terminals are overlapped each other. In other words, the one camera terminal which is capturing an image of a target detection object may be excluded from the camera terminals to be controlled in order to overlap detection ranges. In other words, it is possible to regard the one camera terminal which is capturing an image of a target detection object as broken and perform control for overlapping detection ranges using the other camera terminals only. In this way, images, with highest spatial resolutions, of the target detection object can be obtained, and an image of the whole target detection range is entirely captured.

The detection range adjustment device of the present invention has been described up to this point based on the embodiments and supplementary explanations, but the present invention is not limited to this examples. In the respective embodiments, variations or new functions which can be conceived by a person having ordinary skill in the art may be provided within the scope of this invention. Additionally, components in the respective embodiments can be arbitrarily combined as long as they can coexist functionally.

For example, in the embodiment, plural camera terminals which constitute the detection range adjustment device can control any of pan, tilt and zoom, but the present invention is not always limited to this structure. Any or all of pan, tilt and zoom of several camera terminals may be fixed. With the present invention, plural camera terminals which constitute a detection range adjustment device adjust the positions of the detection ranges which are adjacent to each other so that they are overlapped and make the spatial resolutions the same automatically and coordinately by communicating with each other. Therefore, it is suffice that one of the camera terminals whose detection ranges are adjacent has a function for controlling pan, tilt and zoom. Even in that case, as a result, adjustment is made so that the adjacent detection ranges are overlapped or so that spatial resolutions are made to be the same as the spatial resolution, as the whole target detection range.

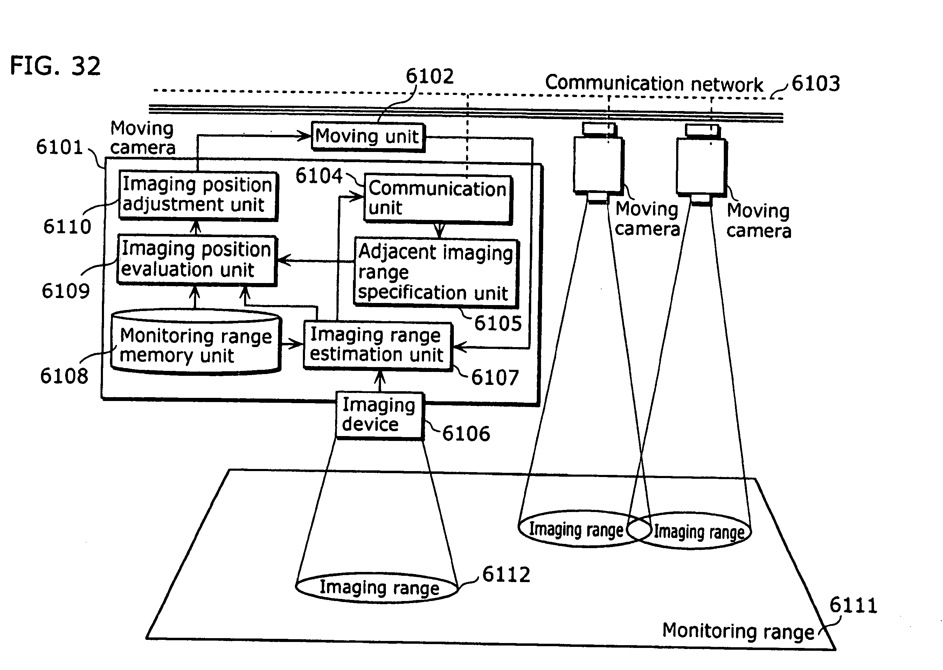

Additionally, the camera terminals are fixed camera terminals which are fixed at specific places in the above-described embodiments, but they may be moving camera terminals. FIG. 32 is a block diagram indicating the structure of the monitoring system in the case of applying the detection range adjustment device of the present invention to the monitoring system which constitutes moving cameras. This monitoring system is composed of plural moving camera terminals 6101 which are connected via the communication network 6103. The feature of this monitoring system is that camera terminals move automatically and coordinately, not only that these moving camera terminals 6101 adjust pan and tilt so that the monitoring range 6111 is entirely monitored. The moving camera terminal 6101 moves supported by the moving unit 6102. The moving unit 6102 is a mechanism or the like that adjusts the imaging position of the moving camera terminal 6101. The communication network 6103 is a transmission path which connects plural moving camera terminals 6101. The communication unit 6104 is a communication interface for enabling the moving camera terminal 6101 to exchange information with the other moving camera terminals via the communication network 6103. The adjacent imaging range specification unit 6105 estimates moving camera terminals whose imaging ranges are adjacent to each other in response to the information from the other moving camera terminals which are notified to the communication unit 6104. The imaging device 6106 is a CCD camera and the like which intakes video in the monitoring range. The imaging range estimation unit 6107 is intended for estimating the imaging range of the moving camera terminal 6101 based on the characteristics of the imaging device 6106 and the positions of the moving unit 6102. The monitoring range memory unit 6108 is a memory or the like which holds the information of the extent of the range to be monitored by the moving camera terminal 6101. The imaging position evaluation unit 6109 is intended for estimating the overlap ranges of the imaging ranges which are adjacent to the imaging range of the moving camera terminal 6101 or the distances from the boundary of the monitoring range. The imaging position evaluation unit 6110 is intended for controlling a moving unit 6102 and adjusting the imaging position of the moving camera terminal 6101. The monitoring range 6111 is the range to be monitored by the moving camera terminal 6101. The imaging range 6112 is the range whose image is captured by the moving camera terminals 6101.

With this monitoring system, the moving camera terminals 6101 communicate, to adjacent moving camera terminals, the information about the imaging range to be estimated based on their imaging positions and the characteristics of the imaging devices 6106. Additionally, the moving camera terminals 6101 adjust the pan, tilt and imaging positions so that the sizes of the overlap ranges of the adjacent imaging ranges and the distances from the boundary of the monitoring range become close to predetermined statuses, coordinating with the adjacent moving camera terminals. This enables the moving camera terminals 6101 to move to the imaging positions that make it possible to reduce dead ranges in the monitoring range during the simultaneous image capturing by the moving camera terminals 6101.

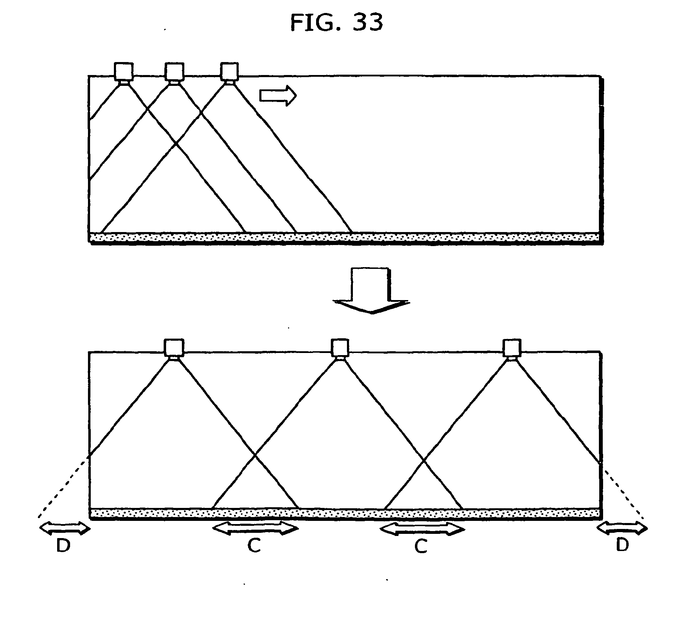

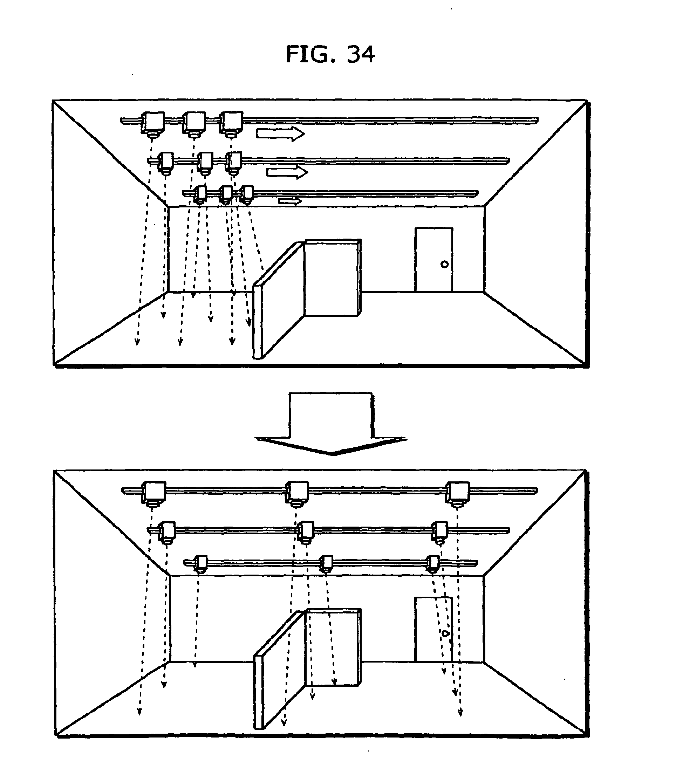

FIG. 33 shows an operation state of the moving camera terminals 6101 in the monitoring system like that. To simplify the explanation, the figure shows the case where moving camera terminals 6101 which can move to the horizontal direction (one-dimension) is set on the ceiling whose height is constant and where the moving camera terminals 6101 are made to monitor the floor. As shown in the above-mentioned figure, even in the case of setting the moving camera terminals 6101 at appropriate positions on the ceiling, the moving camera terminals can automatically move to the positions where plural moving camera terminals can simultaneously capture images of the entire monitoring range as shown in the lower part of the diagram, by adjusting their imaging positions so that one of the widths C of the overlap ranges of the imaging ranges and the distances D from the boundary of the monitoring range become close to the respective predetermined values. Further, in the case of setting moving camera terminals 6101 at one place where it is difficult to perform a setting operation, for example, on a ceiling, the moving camera terminals automatically move to the positions where dead ranges are reduced during the simultaneous image capturing by the moving camera terminals. Therefore, it becomes possible to reduce the workload of determining the setting positions of the moving camera terminals or the workload of setting the moving camera terminals. As for an example of this method, as shown in FIG. 34, it is good that the system is configured in a way that a rail is set in the monitoring range and the moving camera terminals move on the track of the rail.

**Industrial Applicability**

The detection range adjustment device concerning the present invention is useful as a monitoring system where plural cameras are used or a sensing system and the like which measures physical amounts using plural sensor devices, especially as a high-functional monitoring system which is composed of plural camera terminals which can adjust their imaging ranges and which monitors a large range without producing any dead ranges. Such high-functional monitoring systems include a system for monitoring suspects in a school or a building and the like.

**Claims**

1.  A camera monitoring system comprising
    camera terminals (P110, P111, PR1110, 4101, 5301, 5401) which are connected to each other via a communication line,
    wherein said camera monitoring system enables detecting of an image in the target field of view by adjusting fields of view in which said camera terminals (P110, P111, PR1110, 4101, 5301, 5401) detect the image,
    each of said camera terminals (P110, P111, PR1110, 4101, 5301, 5401) includes:

    a camera (P101A-C, PR1101, PR1201, 2103, 2301) which detects an image in the field of view included in the target field of view and has a unit operable to change a position of the field of view and a spatial resolution of the field of view;
    a communication unit (103, 1103, 6104) operable to send, to an other camera terminal (P110, P111, PR1110, 4101, 5301, 5401) among said camera terminals (P110, P111, PR1110, 4101, 5301, 5401), field of view information including information for identifying the field of view and information for identifying the spatial resolution of the field of view, via the communication line, and operable to receive field of view information from said other camera terminal (P110, P111, PR1110, 4101, 5301, 5401); and
    an adjustment unit (102, 1102) operable to adjust the position and the spatial resolution of the field of view by controlling said camera (P101A-C, PR1101, PR1201, 2103, 2301) of said camera terminal (P110, P111, PR1110, 4101, 5301, 5401) so that an undetectable range, which does not belong to any of the fields of view of said camera terminals (P110, P111, PR1110, 4101, 5301, 5401), does not arise and that the spatial resolutions of the fields of view of said camera terminals (P110, P111, PR1110, 4101, 5301, 5401) become approximately the same, based on the field of view information of said camera terminal (P110, P111, PR1110, 4101, 5301, 5401), and the field of view information of said other camera terminal (P110, P111, PR1110, 4101, 5301, 5401) received by said communication unit (103, 1103, 6104).

2.  The camera monitoring system according to Claim 1,
    wherein said adjustment unit (102, 1102) is operable to adjust a position and a spatial resolution of the field of view of said camera terminal by
    selecting the field of view which is adjacent to the field of view of said camera terminal from fields of view of said camera terminals ;
    calculating an overlap range differential amount which is a difference between the predetermined target amount and the overlap range amount of the selected adjacent field of view and the field of view of said camera terminal ;
    calculating a spatial resolution differential amount which is a difference between the spatial resolution of the selected field of view and the spatial resolution of the field of view of said camera terminal ; and
    calculating the position and the spatial resolution of the field of view of said camera terminal,
    the position and the spatial resolution enabling the overlap range differential amount and the spatial resolution differential amount to be close to 0.

3.  The camera monitoring system according to Claim 2,
    wherein said adjustment unit (102, 1102) is operable to calculate the spatial resolution differential amount using a function which takes a smallest value when the spatial resolution of the selected field of view is equal to the spatial resolution of the field of view of said camera terminal.

4.  The camera monitoring system according to Claim 3,
    wherein said camera
    having the field of view whose spatial resolution is within an adjustable range, and
    the function takes a smallest value when the spatial resolution of the selected field of view is equal to the spatial resolution of the field of view of said camera terminal in the case where the spatial resolution of the field of view of said camera terminal is within the adjustable range.

5. The camera monitoring system according to Claim 1, Wherein, in the case where said camera of said camera terminal has detected a target detection object or has received a specification about a spatial resolution of the target detection object, said adjustment unit is operable to adjust, prior to the adjustment of the position and the spatial resolution of the field of view, the spatial resolution of the field of view of said camera terminal to a spatial resolution based on the detected target detection object or the specified spatial resolution.

6. The camera monitoring system according to Claim 1, further comprising:

a synthesis unit operable to obtain images captured by said cameras of said camera terminals and operable to synthesize the captured images as a spatially continuous image; and
a display unit operable to display the synthesized image.

7. A camera monitoring method used in a camera system including camera terminals (P110, P111, PR1110, 4101, 5301, 5401), each of which including: a camera (P101A-C, PR1101, PR1201, 2103, 2301) having a field of view, which is an imaging range, whose position and spatial resolution of the field of view are changeable; and a communication unit (103, 1103, 6104) operable to send and receive field of view information of the camera and an other camera of a camera terminal, among the camera terminals the field of view information including information for indicating the field of view of each camera and information for identifying the spatial resolution of the field of view, said camera monitoring method enabling capturing of an image of a target field of view by adjusting fields of view, said camera monitoring method comprising
an adjusting step of adjusting positions of the fields of view and spatial resolutions of the fields of view by controlling the camera of each camera terminal so that, an undetectable range, which does not belong to any of the fields of view of the camera terminals, does not arise and that the spatial resolutions of the fields of view of the camera terminals become approximately the same, based on the field of view information of the camera terminal, and the field of view information of the other camera terminal received by the communication unit.

8. A program which is used in a camera system which includes camera terminals (P110, P111, PR1110, 4101, 5301, 5401), each of which including: a camera (P101A-C, PR1101, PR1201, 2103, 2301) having a field of view, which is an imaging range, which are changeable; and a communication unit (103, 1103, 6104) which sends and receives field of view information indicating the field of view of the camera and an other camera of a camera terminal among the camera terminals said program being intended for camera terminals
which enable capturing of an image of the target field of view by adjusting fields of view, said program causing a computer to execute steps included in the camera monitoring method according to Claim 7.

**Patentansprüche**

1. Kameraüberwachungssystem, umfassend Kameraendgeräte ((P110, P111, PR1110, 4101, 5301, 5401), die über eine Kommunikationsleitung miteinander verbunden sind,
wobei das Kameraüberwachungssystem das Erkennen eines Bilds im Zielsichtfeld durch Einstellen von Sichtfeldern ermöglicht, in denen die Kameraendgeräte (P110, P111, PR1110, 4101, 5301, 5401) das Bild erkennen,
wobei jedes der Kameraendgeräte (P110, P111, PR1110, 4101, 5301, 5401) Folgendes enthält:

eine Kamera (P101A-C, PR1101, PR1201, 2103, 2301), die ein Bild in dem Sichtfeld erkennt, das im Zielsichtfeld enthalten ist, und eine Einheit aufweist, die zum Ändern des Sichtfelds und einer räumlichen Auflösung des Sichtfelds betriebsfähig ist;
eine Kommunikationseinheit (103, 1103, 6104), die zum Senden, an ein anderes Kameraendgerät (P110, P111, PR1110, 4101, 5301, 5401) unter den Kameraendgeräten (P110, P111, PR1110, 4101, 5301, 5401), von Sichtfeldinformation, darunter Information zum Identifizieren des Sichtfelds und Information zum Identifizieren der räumlichen Auflösung des Sichtfelds, über die Kommunikationsleitung betriebsfähig ist und zum Empfangen von Sichtfeldinformation von dem anderen Kameraendgerät (P110, P111, PR1110, 4101, 5301, 5401) betriebsfähig ist; und
eine Einstelleinheit (102, 1102), die zum Einstellen der Position und der räumlichen Auflösung des Sichtfelds durch derartiges Steuern der Kamera (P101A-C, PR1101, 4101, 5301, 5401) betriebsfähig ist, dass ein unerkennbarer Bereich, der zu keinem der Sichtfelder der Kameraendgeräte (P110, P111, PR1110, 4101, 5301, 5401) gehört, nicht auftritt und die räumlichen Auflösungen der Sichtfelder der Kameraendgeräte (P110, P111,

**EP 1 771 005 B1**

PR1110, 4101, 5301, 5401) auf Grundlage der Sichtfeldinformation des Kameraendgeräts (P110, P111, PR1110, 4101, 5301, 5401) und der Sichtfeldinformation des anderen Kameraendgeräts (P110, P111, PR1110, 4101, 5301, 5401), die von der Kommunikationseinheit (103, 1103, 6104) empfangen ist, ungefähr dieselben werden.

2.  Kameraüberwachungssystem nach Anspruch 1,
    wobei die Einstelleinheit (102, 1102) zum Einstellen einer Position und einer räumlichen Auflösung des Sichtfelds des Kameraendgeräts durch
    Auswählen des Sichtfelds, das dem Sichtfeld des Kameraendgeräts benachbart ist, aus Sichtfeldern der Kameraendgeräte;
    Berechnen einer Überdeckungsbereichsdifferenzmenge, die eine Differenz zwischen der vorgegebenen Zielmenge und der Überdeckungsmenge des ausgewählten benachbarten Sichtfelds und des Sichtfelds des Kameraendgeräts ist;
    Berechnen einer räumlichen Auflösungsdifferenzmenge, die eine Differenz zwischen der räumlichen Auflösung des ausgewählten Sichtfelds und der räumlichen Auflösung des Sichtfelds des Kameraendgeräts ist; und
    Berechnen der Position und der räumlichen Auflösung des Sichtfelds des Kameraendgeräts, wobei die Position und die räumliche Auflösung ermöglichen, dass die Überdeckungsbereichsdifferenzmenge und die räumliche Auflösungsdifferenzmenge nahe 0 sind, betriebsfähig ist.

3.  Kameraüberwachungssystem nach Anspruch 3,
    wobei die Einstelleinheit (102, 1102) zum Berechnen der räumlichen Auflösungsdifferenzmenge unter Benutzung einer Funktion betriebsfähig ist, die einen kleinsten Wert übernimmt, wenn die räumliche Auflösung des ausgewählten Sichtfelds gleich der räumlichen Auflösung des Sichtfelds des Kameraendgeräts ist.

4.  Kameraüberwachungssystem nach Anspruch 3,
    wobei die Kamera das Sichtfeld aufweist, dessen räumliche Auflösung innerhalb eines einstellbaren Bereichs liegt, und
    die Funktion einen kleinsten Wert übernimmt, wenn die räumliche Auflösung des ausgewählten Sichtfelds gleich der räumlichen Auflösung des Sichtfelds des Kameraendgeräts ist, falls die räumliche Auflösung des Sichtfelds des Kameraendgeräts innerhalb des einstellbaren Bereichs liegt.

5.  Kameraüberwachungssystem nach Anspruch 1,
    wobei die Einstelleinheit, falls die Kamera des Kameraendgeräts ein Zielerkennungsobjekt erkannt oder eine Spezifikation über eine räumliche Auflösung des Zielerkennungsobjekts empfangen hat, zum Einstellen, vor der Einstellung der Position und der räumlichen Auflösung des Sichtfelds, der räumlichen Auflösung des Sichtfelds des Kameraendgeräts auf eine räumliche Auflösung auf Grundlage des erkannten Zielerkennungsobjekts oder der spezifizierten räumlichen Auflösung betriebsfähig ist.

6.  Kameraüberwachungssystem nach Anspruch 1, ferner umfassend:

    eine Syntheseeinheit, die zum Erhalten von Bildern betriebsfähig ist, welche durch die Kameras der Kameraendgeräte erfasst sind, und zum Synthetisieren der erfassten Bilder als ein räumlich fortlaufendes Bild betriebsfähig ist; und
    eine Anzeigeeinheit, die zum Anzeigen des synthetisierten Bilds betriebsfähig ist.

7.  Kameraüberwachungsverfahren zur Benutzung in einem Kamerasystem mit Kameraendgeräten (P110, P111, PR1110, 4101, 5301, 5401), die jedes Folgendes enthalten: eine Kamera (P101A-C, PR1101, PR1201, 2103, 2301) mit einem Sichtfeld, das ein Bildgebungsbereich ist, wobei Position und räumliche Auflösung des Sichtfelds änderbar sind; und eine Kommunikationseinheit (103, 1103, 6104), die zum Senden und Empfangen von Sichtfeldinformation der Kamera und einer anderen Kamera eines Kameraendgeräts unter den Kameraendgeräten betriebsfähig ist, wobei die Sichtfeldinformation Information zum Identifizieren des Sichtfelds jeder Kamera und Information zum Identifizieren der räumlichen Auflösung des Sichtfelds enthält, wobei das Verfahren das Erfassen eines Bilds eines Zielsichtfelds durch Einstellen von Sichtfeldern ermöglicht, das Kameraüberwachungsverfahren umfassend einen Einstellschritt des Einstellens von Positionen der Sichtfelder und räumlichen Auflösungen der Sichtfelder durch derartiges Steuern der Kamera jeden Kameraendgeräts, dass ein unerkennbarer Bereich, der zu keinem der Sichtfelder der Kameraendgeräte gehört, nicht auftritt und dass die räumlichen Auflösungen der Sichtfelder der Kameraendgeräte auf Grundlage der Sichtfeldinformation des Kameraendgeräts und der Sichtfeldinformation des anderen Kameraendgeräts, die von der Kommunikationseinheit empfangen ist, ungefähr dieselben werden.

8. Programm zur Benutzung in einem Kamerasystem, das Kameraendgeräte (P110, P111, PR1110, 4101, 5301, 5401) enthält, die jedes Folgendes enthalten: eine Kamera (P101A-C, PR1101, PR1201, 2103, 2301) mit einem Sichtfeld, das ein Bildgebungsbereich ist, die änderbar sind; und eine Kommunikationseinheit (103, 1103, 6104), die Sichtfeldinformation der Kamera und einer anderen Kamera eines Kameraendgeräts unter den Kameraendgeräten sendet und empfängt, wobei das Programm für Kameraendgeräte bestimmt ist, die das Erfassen eines Bilds des Zielsichtfelds durch Einstellen von Sichtfeldern ermöglicht, wobei das Programm bewirkt, dass ein Rechner Schritte ausführt, die in dem Kameraüberwachungsverfahren nach Anspruch 7 enthalten sind.

**Revendications**

1. Système de surveillance par caméra comprenant des terminaux de caméras (P110, P111, PR1110, 4101, 5301, 5401) qui sont reliés entre eux par une ligne de communication,
   où ledit système de surveillance par caméra permet de détecter une image dans le champ de vision cible en ajustant les champs de vision dans lesquels lesdits terminaux de caméras (P110, P111, PR1110, 4101, 5301, 5401) détectent l'image,
   chacun desdits terminaux de caméras (P110, P111, PR1110, 410-1, 5301, 5401) comporte :

   une caméra (P101A-C, PR1101, PR1201, 2103, 2301) qui détecte une image dans le champ de vision inclus dans le champ de vision cible et possède une unité pouvant fonctionner pour changer une position du champ de vision et une résolution spatiale du champ de vision ;
   une unité de communication (103, 1103, 6104) pouvant fonctionner pour envoyer, à travers la ligne de communication, à un autre terminal de caméra (P110, P111, PR1110, 4101, 5301, 5401) parmi lesdits terminaux de caméras (P110, P111, PR1110, 4101, 5301, 5401), des informations de champ de vision comportant des informations permettant d'identifier le champ de vision et des informations permettant d'identifier la résolution spatiale du champ de vision, et pouvant fonctionner pour recevoir des informations de champ de vision à partir dudit autre terminal de caméra (P110, P111, PR1110, 4101, 5301, 5401) ; et
   une unité d'ajustement (102, 1102) pouvant fonctionner pour ajuster la position et la résolution spatiale du champ de vision en commandant ladite caméra (P101A-C, PR1101, PR1201, 2103, 2301) dudit terminal de caméra (P110, P111, PR1110, 4101, 5301, 5401) de sorte qu'une plage indétectable, qui n'appartient a aucun des champs de vision desdits terminaux de caméras (P110, P111, PR1110, 4101, 5301, 5401), ne soit pas atteinte et que les résolutions spatiales des champs de vision desdits terminaux, de caméras (P110, P111, PR1110, 4101, 5301, 5401) deviennent approximativement les mêmes, sur la base des informations de champ de vision dudit terminal de caméra (P110, P111, PR1110, 4101, 5301, 5401), et les informations de champ de vision sur ledit autre terminal de caméra (P110, P111, PR1110, 4101, 5301, 5401) reçu par ladite unité de communication (103 , 1103, 6104).

2. Système de surveillance par caméra selon la revendication 1,
   dans lequel ladite unité d'ajustement (102, 1102) peut fonctionner pour ajuster une position et une résolution spatiale du champ de vision dudit terminal de caméra en
   sélectionnant le champ de vision qui est adjacent au champ de vision dudit terminal de caméra, à partir des champs de vision desdits terminaux de caméra ;
   de calculer une grandeur différentielle de la plage de chevauchement qui représente la différence entre la grandeur cible prédéterminée et la grandeur de la plage de chevauchement du champ de vision adjacent sélectionné et du champ de vision dudit terminal de caméra ;
   de calculer une grandeur différentielle de résolution spatiale qui représente la différence entre la résolution spatiale du champ de vision sélectionné et la résolution spatiale du champ de vision dudit terminal de caméra ; et
   de calculer la position et la résolution spatiale du champ de vision dudit terminal de caméra, la position et la résolution spatiale permettant à la grandeur différentielle de la plage de chevauchement et à la grandeur différentielle de résolution spatiale d'être presque nulles.

3. Système de surveillance par caméra selon la revendication 2,
   dans lequel ladite unité d'ajustement (102, 1102) peut fonctionner pour calculer la grandeur différentielle de résolution spatiale en utilisant une fonction qui prend une valeur minimale lorsque la résolution spatiale du champ sélectionné du champ de vision est égale à la résolution spatiale du champ de vision dudit terminal de caméra.

4. Système de surveillance par caméra selon la revendication 3,
   dans lequel ladite caméra ayant le champ de vision dont la résolution spatiale se trouve dans une plage ajustable, et

la fonction prend une valeur minimale lorsque la résolution spatiale du champ de vision sélectionné est étale à la résolution spatiale du champ de vision dudit terminal de caméra dans le cas où la résolution spatiale du champ de vision dudit terminal de caméra se trouve dans une plage ajustable.

5. Système de surveillance par caméra selon la revendication 1,
dans lequel, dans le cas où ladite caméra dudit terminal de caméra a détecté un objet de détection cible ou a reçu une spécification concernant une résolution spatiale de l'objet de détection cible, ladite unité d'ajustement peut fonctionner pour ajuster, avant l'ajustement de la position et de la résolution spatiale du champ de vision, la résolution spatiale du champ de vision dudit terminal de caméra, à une résolution spatiale sur la base de l'objet de détection cible détecté ou de la résolution spatiale spécifique.

6. Système de surveillance par caméra selon la revendication 1, comprenant en outre :

une unité de synthèse pouvant fonctionner pour obtenir des images capturées par lesdites caméras desdits terminaux de caméra et pouvant fonctionner pour synthétiser les images capturées en tant qu'une image continue dans l'espace ; et
une unité d'affichage pouvant fonctionner pour afficher l'image synthétisée.

7. Procédé de surveillance par caméra utilisé dans un système de caméra comportant des terminaux de caméras (P110, P111, PR1110, 4101, 5301, 5401), chacun desquels comportant : une caméra (P101A-C, PR1101, PR1201, 2103, 2301) ayant un champ de vision, qui est une plage de formation d'images, dont la position et la résolution spatiale du champ de vision peuvent être modifié ; et une unité de communication (103, 1103, 6104) pouvant fonctionner pour envoyer et recevoir des informations de champ de vision de la caméra et d'une autre caméra d'un terminal de caméra parmi les terminaux de caméras, les informations de champ de vision comportant des informations pour indiquer le champ de vision de chaque caméra et des informations pour identifier la résolution spatiale du champ de vision, ledit procédé de surveillance par caméra permettant de capturer une image d'un champ de vision cible en ajustant des champs de vision, ledit procédé de surveillance par caméra comprenant
une étape d'ajustement qui consiste à ajuster des positions des champs de vision et des résolutions spatiales des champs de vision en commandant la caméra de chaque terminal de caméra de sorte qu'une plage indétectable, qui n'appartient pas à l'un des champs de vision des terminaux de caméra, ne soit pas atteinte et que les résolutions spatiales des champs de vision des terminaux de caméra deviennent approximativement les mêmes, sur la base des informations de champ de vision du terminal de caméra et les informations de champ de vision de l'autre terminal de caméra reçu par ladite unité de communication.

8. Programme qui est utilisé dans un système de caméra qui comprend des terminaux de caméras (P110, P111, PR1110, 4101, 5301, 5401), chacun desquels comportant : une caméra (P101A-C, PR1101, PR1201, 2103, 2301) ayant un champ de vision, qui est une plage de formation d'images, pouvant être modifié ; et une unité de communication (103, 1103, 6104) qui envoie et reçoit des informations de champ de vision indiquant le champ de vision de la caméra et d'une autre caméra d'un terminal de caméra parmi les terminaux de caméras, ledit programme étant destiné à des terminaux de caméras qui permettent de capturer une image du champ de vision cible en ajustant des champs de vision, ledit programme amenant un ordinateur à exécuter des étapes incluses dans le procédé de surveillance par caméra selon la revendication 7.

# FIG. 1

**9010 — Detection camera device**
- 9012
- 9011 — Camera
- 9013 — Moving object extraction unit
- 9014 — Position information extraction unit

**9020 — Judgment camera device**
- 9021 — Camera
- 9022 — Camera control unit

**9030 — Judgment processing unit**
- 9031 — Moving object extraction unit
- 9032 — Object judgment
- 9033 — Position information extraction unit

**9040 — Information processing unit**
- 9041 — Object mark unit
- 9041 — Plan view position update unit

FIG. 2

● Detection
   camera

▲ Judgment
   camera

## FIG. 3

Camera for detecting moving object — 9211

Attitude control unit — 9212

Attitude control unit — 9222

Monitoring camera — 9221

Image output device — 9223

Camera angle memory unit — 9231

Camera angle memory unit — 9232

Moving object extraction unit — 9241

Feature position extraction unit — 9242

Target object trace unit — 9244

Camera angle specification unit — 9245

Feature position information memory unit — 9243

Image processing device — 9240

EP 1 771 005 B1

## FIG. 4

## FIG. 5

# FIG. 6

Detection target

# FIG. 7

● Detection camera

FIG. 8

EP 1 771 005 B1

FIG. 9A

Z_W axis

X_W axis

Y_W axis

103

110A    110B    110C

Operation terminal

111R(111L)

140A    140B    140C    Undetectable range 131

FIG. 9B

FIG. 9C

## FIG. 10A

Camera 101

203

Image processing unit → To adjustment unit 102

Lens 201
Image capture surface 202

204
Attitude control unit ↔ To adjustment unit 102

## FIG. 10B

Camera 101

203

Image processing unit → To adjustment unit 102

Lens 201
Image capture surface 202

204
Attitude control unit ↔ To adjustment unit 102

## FIG. 10C

Camera 101

203

Image processing unit → To adjustment unit 102

Lens 201
Image capture surface 202

204
Attitude control unit ↔ To adjustment unit 102

# FIG. 11

START

Select detection range adjacent to current detection range — Step 301

Calculate size of overlap range between selected detection range and current detection range — Step 302

Adjust position of detection range so that size of overlap range becomes close to predetermined amount C — Step 303

FIG. 12A

$(X_{TL}-0)/2+0$   $(X_{AR}-X_{AL})/2+X_{AL}$   $(X_{BR}-X_{BL})/2+X_{BL}$   $(X_{CR}-X_{CL})/2+X_{CL}$   $(Max-X_{TR})/2+X_{TR}$

| Left neighbor | Right neighbor | Left neighbor | Right neighbor | Left neighbor | Right neighbor |

$Z_W$ axis 121

$X_{AL}$   $X_{TL}$   $X_{BL}$   $X_{AR}$   $X_{CL}$   $X_{BR}$   $X_{TR}$   $X_{CR}$

$X_W$ axis 120

0                                                                                                    Max

Overlap range 141TA

Detection range 140A

Detection range 140B

Detection range 140C

Overlap range 141CT

Undetectable range 131

Overlap range 141AB   Overlap range 141BC

Undetectable range 131

Target detection range 130

$X_{AL}$   $X_{TL}$   $X_{BL}$   $X_{AR}$   $X_{CL}$   $X_{BR}$   $X_{TR}$   $X_{CR}$

FIG. 12B

$X_W$ axis

EP 1 771 005 B1

## FIG. 13

$U_{AL}(X_{AL}) = (X_{AL} - X_{TL} - C)^4$

$U_{AL}(X_{AL}) = |X_{AL} - X_{TL} - C|$

$U_{AL}(X_{AL}) = (X_{AL} - X_{TL} - C)^2$

$C$

$X_{AL} - X_{TL}$

## FIG. 14

changeable extent of $X_{AL} - X_{TL}$

$U_{AL}(X_{AL})$

$C$

$X_{AL} - X_{TL}$

# FIG. 15

Adjustment unit ⌐102

ネットワーク112

Camera terminal P 110A    Camera terminal P 110B    Camera terminal P 110C

103

| Communication unit | Communication unit ⌐103 | Communication unit ⌐103 | Communication unit ⌐103 | Communication unit |
|---|---|---|---|---|

Operation terminal 111L

Camera P ⌐101    Camera P ⌐101    Camera P ⌐101

103

Operation terminal 111R

EP 1 771 005 B1

FIG. 16A          FIG. 16B

Microphone

Directional pattern

Sensing range

FIG. 17A

X_w axis

To Y axis

FIG. 17B

X_w axis

To Y axis

FIG. 18

Network 1112

Camera terminal P 1110A  Camera terminal P 1110B  Camera terminal P 1110C

1103

Communication unit  — Operation terminal 1111L

Communication unit — 1103
Adjustment terminal — 1102
Camera PR — 1101

Communication unit — 1103
Adjustment terminal — 1102
Camera PR — 1101

Communication unit — 1103
Adjustment terminal — 1102
Camera PR — 1101

Communication unit — 1103
Operation terminal 1111R

$Z_W$ axis 1122

spatial resolution $R_A$

spatial resolution $R_B$

spatial resolution $R_C$

$X_{AL}$  $X_{TL}$  $X_{BL}$  $X_{AR}$  $X_{CL}$  $X_{BR}$  $X_{TR}$  $X_{CR}$

$X_W$ axis 1120

0  Max

Detection range 1140A

Detection range 1140B

Detection range 1140C

Real space surface 1125

Overlap range 1141TA

Overlap range 1141AB

Overlap range 1141BC

Overlap range 1141CT

Undetectable range 1131

Target detection range 1130

Undetectable range 1131

EP 1 771 005 B1

## FIG. 19A

Camera 1101

1203

Image processing unit

To adjustment unit 1102

Lens 1201 | Image capture surface 1202

1204

Attitude control unit

To adjustment unit 1102

## FIG. 19B

Camera 1101

1203

Image processing unit

To adjustment unit 1102

Lens 1201

Image capture surface 1202

1204

Attitude control unit

To adjustment unit 1102

# FIG. 20

START

Select detection range adjacent to current detection range —— Step 1301

Calculate size of overlap range between selected detection range and current detection range —— Step 1302

Calculate difference in spatial resolutions between selected detection range and current detection range —— Step 1303

Adjust position of detection range so that size of overlap range becomes close to predetermined amount C

Adjust spatial resolutions so that difference becomes close to O —— Step 1304

# FIG. 21

# FIG. 22

Network 2212

Camera terminal P 2210A
Camera terminal P 2210B
Camera terminal P 2210C

2203

Communication unit — 2203 (×5)

Operation terminal 2211L

Adjustment terminal — 2202

Camera P — 2201

Operation terminal 2211R

$Z_W$ axis 2222

Real space surface 2225

$Z_C$

$X_{AL}$  $X_{TL}$  $X_{BL}$  $X_{AR}$  $X_{CL}$  $X_{BR}$  $X_{TR}$  $X_{CR}$

$X_W$ axis 2220

0

Max

Detection range 2240A

Detection range 2240B

Detection range 2240C

Overlap range 2241TA

Overlap range 2241AB

Overlap range 2241BC

Overlap range 2241CT

Undetectable range 2231

Target detection range 2230

Undetectable range 2231

EP 1 771 005 B1

## FIG. 23

Camera P 2301

Laser pointer 2305

2303

Image processing unit

To Adjustment unit 102

Image capture surface 2302

Lens 2301

2304

Laser pointer 2305

Attitude control unit

To Adjustment unit 102

## FIG. 24

$(X_1, Y_1)$

Range A

$$(Y_A - Y_1) > \frac{(Y_2 - Y_1)}{(X_2 - X_1)}(Y_A - X_1)$$

Range B

$$(Y_A - Y_1) < \frac{(Y_2 - Y_1)}{(X_2 - X_1)}(Y_A - X_1)$$

$(X_2, Y_2)$

$$(Y - Y_1) = \frac{(Y_2 - Y_1)}{(X_2 - X_1)}(X - X_1)$$

## FIG. 25A

Range A

$(X_1, Y_1)$     $(X_2, Y_2)$

Range D          Range B

Z               Detection range

$(X_4, Y_4)$     $(X_3, Y_3)$

Range C

## FIG. 25B

Detection range

## FIG. 25C

Detection range

## FIG. 26

Wireless network 4102

Camera terminal 4101

Car 4103          Car 4103

Operation terminal 4105     Operation terminal 4105

Detection range 4106B     Detection range 4106A     Road 4104

## FIG. 27

```
                    ┌──────────┐
                    │  START   │
                    └──────────┘
                          │
     ┌───────────────────►│
     │                    │       ┌─Step 5104
     │                    ▼
     │              ╱───────────╲              Yes
     │            ╱   Detection    ╲──────────────────────────────────┐
     │            ╲ range specified ?╱                                 │
     │              ╲───────────╱                                      │
     │                    │                                            │
     │                 No │                    ┌─Step 5101             │
     │                    ▼                                            │      ┌─Step 5105
     │       ┌────────────────────────┐        ┌───────────────────────────────────┐
     │       │ Select detection range │        │ Adjust to detection range         │
     │       │ adjacent to current    │        │ position specified as current     │
     │       │ detection range        │        │ detection range                   │
     │       └────────────────────────┘        └───────────────────────────────────┘
     │                    │                                            │
     │                    │        ┌─Step 5102                         │
     │                    ▼                                            │
     │       ┌────────────────────────┐                               │
     │       │ Calculate size of overlap│                             │
     │       │ range between selected  │                              │
     │       │ detection range and current│                          │
     │       │ detection range         │                              │
     │       └────────────────────────┘                               │
     │                    │                                            │
     │                    │        ┌─Step 5103                         │
     │                    ▼                                            │
     │       ┌────────────────────────┐                               │
     │       │ Adjust position of detection│                          │
     │       │ range so that size of overlap│                         │
     │       │ range becomes close to  │                              │
     │       │ predetermined amount C  │                              │
     │       └────────────────────────┘                               │
     │                    │                                            │
     └────────────────────┴────────────────────────────────────────┘
```

EP 1 771 005 B1

## FIG. 28

START

Step 5105

Detection range or spatial resolution specified ?

Yes

No

Step 5201

Select detection range adjacent to current detection range

Step 5106

Adjust to detection range position specified as current detection range or spatial resolution

Step 5202

Calculate size of overlap range between selected detection range and current detection range

Step 5203

Calculate difference in spatial resolutions between selected detection range and current detection range

Step 5204

Adjust position of detection range so that size of overlap range becomes close to predetermined amount C

Adjust spatial resolutions so that difference becomes close to 0

## FIG. 29

Network 5302

Camera terminal 5301A
Camera terminal 5301B
Camera terminal 5301C
Camera terminal 5301D
Camera terminal 5301E

Target detection object 5303

Target detection range 5304

# FIG. 30

Network 5402

Image synthesis unit 5405

Display unit 5406

Specification unit 5407

Camera terminal 5401A

Camera terminal 5401B

Camera terminal 5401C

Target detection area 5403

Target detection range 5404

EP 1 771 005 B1

## FIG. 31

Image obtained by camera terminal 5401B

Target detection object 5403

Image synthesized in image synthesis unit 5405

Image obtained by camera terminal 5401A

Image obtained by camera terminal 5401C

EP 1 771 005 B1

# FIG. 32

EP 1 771 005 B1

## FIG. 33

## FIG. 34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3043925 B

- JP 3180730 B

### Non-patent literature cited in the description

- **TV Cameras ; Lenses., R. Tsai.** A Versatile Camera Calibration Technique for High-Accuracy 3D Machine Vision Metrology Using Off-the-Shelf. *IEEE journal of Robotics and Automation,* 1987, vol. RA-3 (4), 323-344